# FASCICULE DE BREVET EUROPEEN

(11) **EP 1 192 211 B1**
(45) Date de publication et mention de la délivrance du brevet: **16.02.2005**
(21) Numéro de dépôt: 00940458.3
(22) Date de dépôt: 08.06.2000
(51) Int. Cl.: C08K 5/00, C08K 5/55, C09K 3/10

(54) **PROCEDE DE REALISATION D'UN REVETEMENT ANTI-ADHERENT ET ETANCHE APPLIQUE SUR UN JOINT DE CULASSE, METTANT EN OEUVRE UN MATERIAU SILICONE**
VERFAHREN ZUR HERSTELLUNG EINER AUF EINE ZYLINDERKOPFDICHTUNG HAFTMINDERNDER, ABDICHTENDER BESCHICHTUNG AUF BASIS VON POLYSILOXANE
METHOD FOR PRODUCING A SEALED RELEASE COATING APPLIED ON A CYLINDER-HEAD GASKET USING A SILICONE MATERIAL

(30) Priorité: 11.06.1999 FR 9907648
(43) Date de publication de la demande: 03.04.2002
(73) Titulaire: RHODIA CHIMIE, 92408 Courbevoie Cédex (FR)
(72) Inventeur: FRANCES, Jean-Marc, F-69330 Meyzieu (FR); LOUBET, Olivier, F-69003 Lyon (FR)
(74) Mandataire: Trolliet, Maurice
(86) Numéro de dépôt international: PCT/FR2000/001571
(87) Numéro de publication internationale: WO 2000/077083

(56) Documents cités:
- EP-A- 0 522 703
- EP-A- 0 539 234
- WO-A-97/35924
- FR-A- 2 757 530
- FR-A- 2 757 870

## Description

Le domaine général de la présente invention est celui de l'utilisation de compositions silicones réticulables, en vue de réaliser des matériaux réticulés, par exemple des élastomères, utiles notamment pour le jointoiement, l'étanchéification et l'anti-adhérence.

Plus précisément, l'invention concerne l'utilisation de compositions silicones réticulables pour le traitement de joints plats, notamment pour imprégner ou vernir (revêtir) les joints de culasse des moteurs à explosion. En d'autres termes, il s'agit de réaliser à l'aide de ces compositions silicones réticulables, des imprégnations de joints plats (joints de culasse) et/ou des revêtements anti-adhésifs à l'interface *"bloc moteur*/*culasse"* de moteurs thermiques, ladite interface étant de préférence le joint de culasse en lui-même.

L'unité principale d'un moteur à combustion comprend différentes sous unités qui doivent être démontées pour permettre un accès à l'intérieur du moteur. L'une de ses sous-unités est la culasse. Les surfaces en contact entre la culasse et le bloc moteur (ou bloc cylindre) ne sont pas strictement parallèles et la finition de leur état de surface ne peut être parfaite. Pour effacer ces irrégularités, il est nécessaire de placer un joint relativement souple entre la culasse et le bloc moteur pour absorber les imperfections de surface susvisées ainsi que pour assurer l'étanchéité des circulations croisées du liquide de refroidissement (eau + glycol + agent alcalin), de l'huile et des gaz en cours de combustion. Le joint de culasse a également pour rôle d'assurer la cohésion de l'ensemble démontable "*bloc moteur*/*culasse*". Pour assumer ces rôles, le joint de culasse doit donc être capable d'exprimer au moins deux fonctions de base, à savoir : l'étanchéité et l'anti-adhérence.

Dans le cas où le matériau constitutif du joint de culasse est de nature poreuse (joint composite), il est nécessaire d'effacer au moins partiellement cette porosité par imprégnation. Cela permet, d'une part, d'améliorer l'étanchéité du matériau vis-à-vis des fluides présents dans le moteur et, d'autre part, de lui conférer un certain degré de souplesse utile pour absorber la compression du joint lors du serrage de la culasse sur le bloc moteur.

De plus, au démontage de la culasse, le joint doit pouvoir être retiré facilement sans adhérer aux surfaces des deux plans de joints. Cette fonction d'anti-adhérence est procurée par les produits de vernissage qui sont appliqués sous forme de revêtement.

Les trois types les plus courants de joints de culasse sont les joints composites, les joints métalliques et les joints multifeuilles métalliques.

Le joint composite appelé aussi joint fibreux (ou soft) est utilisé pour les véhicules particuliers, les petites machines domestiques et les cycles à moteur. Il est constitué d'une plaque ou âme métallique intercalée entre deux plaques de composite à base de fibre organique (aramide) et de charge minérale (graphite). Le joint composite comprend également des sertissures, des anneaux de feu, souvent sur la chambre d'explosion et un trottoir en élastomère silicone pour circonscrire les fuites possibles sur la surface.

Classiquement, ces joints composites sont soumis à des traitements d'imprégnation par trempage dans des résines silicones thermiques de polycondensation (résines hydroxylées catalysées à l'octoate de plomb) ou de polyaddition (résines SiH/Si- vinyle catalysées au platine). Le vernissage du joint à l'aide de résines silicones (polyaddition et polycondensation) succède à l'imprégnation. Enfin, on dépose par sérigraphie le trottoir en élastomère silicone.

Le joint métallique est utilisé pour certains véhicules haut de gamme et pour les engins de travaux publics. Il existe également des inserts métal-élastomère-silicone du type élastomère vulcanisable à chaud EVC.

Le joint multifeuilles métallique, appelé plus communément MLS ("multi layered steel") est utilisé pour les véhicules particuliers et industriels. Il est constitué de feuillets métalliques recouverts chacun sur les deux faces d'un revêtement élastomère. Ces joints multifeuilles métallique MLS sont en fort développement. Contrairement aux joints composites, il est à noter qu'ils ne sont soumis qu'à l'étape de traitement par vernissage avec l'élastomère.

Les MLS permettent de réduire la distorsion, d'améliorer le moment de torsion et donc le rendement des moteurs. Il en découle une consommation plus faible, une réduction des émissions polluantes et un coût plus faible. Au niveau de la fabrication les MLS permettent un meilleur contrôle des dimensions et de l'épaisseur des joints, cela facilitant l'ajustement lors du montage. Grâce à leur résistance à l'explosion et à la corrosion, ces joints MLS donnent de meilleures performances que les joints à fibres composites.

Les imprégnants et vernis classiquement utilisés pour les joints composites sont des compositions constituées d'huiles ou de résines silicones de faible viscosité, comportant des groupements fonctionnels SiOH ou SiH (US-A-4 720 316 ; EP-A-272 382), SiVinyl (DE-A-3 731 032 ; US-A-4 499 135), ou de mélanges d'une huile ou résine silicone comportant des groupements fonctionnels SiH et d'une huile ou résine silicone comportant des groupements fonctionnels SiVinyle (DE-A-3 718 559 ; EP-A-471 979 ; DE-A-3 544 740), capables de réticuler à température élevée (généralement supérieure à 100° C) en présence d'un catalyseur métallique tel que les sels d'étain, de titane, de zirconium, de platine ou d'un péroxyde.

Les compositions à base d'huiles ou de résines silicones comportant des groupements fonctionnels SiOH, SiH, SiVinyle ou SiH/SiVinyle présentent généralement au moins un des inconvénients suivants :
- le mélange constitué par la matrice silicone et le catalyseur est instable à température ambiante (surtout en l'absence de solvant), cette instabilité se traduisant par une augmentation de viscosité, voire par une gélification du bain d'imprégnation ou de vernissage, ce qui nécessite un fréquent remplacement du bain d'imprégnation
ou de vernissage ou un traitement en deux étapes ; par exemple les brevets US-A-4 720 316 et EP-A-272 382 préconisent la mise en oeuvre du catalyseur lors de la fabrication du carton, puis imprégnation du carton séché par une huile silicone à groupements SiH ;
- il est souvent nécessaire de disperser le mélange silicone + catalyseur dans un solvant organique afin d'augmenter la stabilité et diminuer la viscosité dudit mélange ; il en découle les inconvénients liés à l'utilisation de solvants (toxicité, prévoir des dispositifs de sécurité et de recyclage du solvant) ;
- le prix de revient des matières premières est élevé, notamment dans le cas des huiles ou des résines vinylées associées éventuellement à des huiles ou résines à fonctions SiH et à un catalyseur au platine ; ces mélanges peuvent être très stables à température ambiante, notamment en présence d'un inhibiteur du platine, mais sont onéreux du fait de la mise en oeuvre d'huiles ou de résines vinylées.

Dans la quête d'une nouvelle composition silicone pour le traitement de joints de culasse, ayant pour objectif de perfectionner les compositions connues susvisées, il a été proposé d'utiliser une composition silicone réticulable par hydrosilylation et contenant un POS α,ω-diOH, un POS à motif SiH du type polyméthylhydrogénosiloxane ainsi que de l'éthynylcyclohexanol, ce dernier composé permettant de former des résines à fonction silanol ; le ratio SiH / SiOH du POS concerné étant de l'ordre de 10/1 à 30/1, la composition comprenant également un catalyseur de polyaddition du type Karstedt (cf. demande de brevet français FR-A-2 697 532).

Même si une telle composition amène effectivement des améliorations, sur le plan de la stabilité, de la réactivité et de la souplesse d'emploi, il n'en reste pas moins que la réticulation propre à ce type de composition comporte une étape contraignante de chauffage à température élevée (160° C) pendant 5 à 10 minutes. Une telle étape est particulièrement pénalisante quant à la productivité d'un procédé industriel de traitement ou de revêtement de joints de culasse à l'aide de silicones. Il peut ainsi être, par exemple, nécessaire de recourir à l'utilisation d'appareillages sophistiqués et coûteux tels que de long tunnels de chauffage. Il apparaît donc que ces compositions silicones réticulables par polyaddition et utilisées pour le revêtement de joints de culasse n'apporte pas encore une solution entièrement satisfaisante au problème de la réalisation d'imprégnation et de traitement silicone de joints de culasse, qui répondent aux spécifications d'anti-adhérence et de compressibilité, de même qu'aux exigences de productivité et de rentabilité pour les productions à grande échelle.

La demande de brevet français N° 2 722 203 est relative à l'application d'un revêtement fluorosilicone réticulable sur un joint de culasse. Un tel revêtement est obtenu à partir d'une composition silicone réticulable sous l'effet de la chaleur, des UV ou d'un faisceau d'électrons, par hydrosilylation. Cette composition comprend un fluorosilicone vinylé, un POS porteur de motifs SiH, un catalyseur d'hydrosilylation au platine, un catalyseur de condensation du type péroxyde et éventuellement un solvant du type solvant halogéné, ester ou cétone. Le support sur lequel est susceptible d'être appliquée cette composition est décrit comme étant de préférence de nature silicone. Ce revêtement est plus spécifiquement destiné à réduire l'impérméabilité vis à vis de l'huile des joints de culasse. Il s'agit d'un revêtement relativement épais : 0,1 - 10 mm, qui se caractérise par un temps de réticulation relativement long (plusieurs minutes) et qui ne peut s'affranchir d'une activation par la chaleur pour la réticulation, même dans les cas où l'on utilise des UV. Ce revêtement connu n'est donc pas lui non plus satisfaisant en ce qui concerne les exigences liées à la production industrielle à grande échelle. Par ailleurs, le fait que la réticulation de cette composition fluorosilicone soit fondée sur un mécanisme d'hydrosilylation SiH/SiVi pose des problèmes de stabilité.

Le brevet américain N° 5 260 348 décrit également une composition silicone réticulable sous UV, selon un mécanisme de condensation. Une telle composition est utile pour la préparation de revêtement anti-adhérent (" release coating ") notamment pour joints de culasse. Cette composition comprend un POS α, ω-diOH du type polydiméthylsiloxane ou polydifluoroalkylsiloxane, un agent de réticulation du type méthyl- ou éthyltriacétoxysilane ou métbyltribenzoxysilane, et un photoamorceur formé par un sel d'onium (iodonium) dont le contre-anion est BF₄⁻ ou SbF₆⁻. Ces compositions silicones réticulables sous UV par condensation ne peuvent s'affranchir d'une activation thermique complémentaire pour obtenir des durées de réticulation raisonnables. Il va de soi que cela complique le procédé industriel. Le contre-anion le plus performant pour la réticulation sous UV, est le SbF₆⁻, mais il se trouve qu'il présente l'inconvénient majeur de contenir un métal lourd, ce qui peut induire un problème de toxicité vis-à-vis de l'environnement.

S'agissant du vernissage des joints de culasse métalliques et notamment des joints multifeuilles MLS, on connaît, en pratique, des revêtements élastomères caoutchouc NBR ou des revêtements élastomères fluorés du type Viton®.

Le NBR est un élastomère formé par un copolymère acrylonitrile-butadiène dont le principal inconvénient dans les applications joints de culasse est sa faible tenue thermique.

Le Viton® est un copolymère statistique de fluorure de vinylidène d'hexafluoropropène et de tétrafluoroéthylène. Les compositions de revêtement pour joints de culasse à base de Viton® comprennent également du talc ou du silicate de magnésium, du noir de carbone, une huile silicone non liée et des esters d'acides gras (plastifiants) et un agent de réticulation de type bis-phénol ou diamine. Il est à noter que la demande de brevet japonais JP-A-08/209113 concerne de tels vernis à base de Viton® pour joints de culasse multifeuilles métalliques. La réalisation de revêtements ou de vernis élastomères en Viton® implique une réticulation thermique de 2,5 à 15 minutes à une température de 200 à 250°C, suivie d'une post-vulcanisation de plusieurs heures à température élevée.

En outre l'application de la composition non réticulée de Viton® se fait par projection au pistolet d'une solution organique. Or, on sait que le recours à des solvants organiques pose des problèmes de sécurité et de toxicité. De plus, ce procédé est contraignant en ce qu'il ne permet pas de réaliser des films d'élastomère d'épaisseur supérieur à 12 µm. L'adhérence de ce revêtement élastomère à base de Viton® sur le métal reste perfectible. Enfin et surtout, le coût "matière et procédé" pour ces revêtements à base de Viton® reste relativement élevé.

La demande de brevet PCT/WO-A-98/29 498 concerne aussi bien les joints de culasse métalliques que les joints de culasse composites. L'invention objet de cette demande PCT est la réalisation d'imprégnation et/ou de revêtement pour joints de culasse, par mise en oeuvre de composition silicone réticulable par voie cationique sous activation et en présence de photoamorceurs spécifiques sélectionnés parmi les borates d'onium ou de complexes organométalliques dont les contre- anions borates comprennent au moins un bore lié à au moins un phényle substitué (Me, F). Le précurseur silicone liquide est un polydiméthylsiloxane substitué par des groupements fonctionnels de pontage par voie cationique par exemple de type époxy ou vinyloxy. Il s'est avéré que cette invention est perfectible au regard de certaines des spécifications formant le cahier des charges pour les revêtements ou vernis de joints de culasse et notamment les joints de culasse multifeuilles métalliques MLS. Ces spécifications sont rappelées ci-après :
- antiadhérence du bloc moteur et de la culasse sur le joint revêtu du film élastomère réticulé,
- adhésion de ce revêtement sur le support en particulier métallique constituant le joint,
- étanchéité,
- propriétés mécaniques (dureté - résistance à la rayure),
- résistance aux solvants,
- résistance aux fluides moteurs (huiles et liquides de refroidissement),
- tenue en température.

Force est donc de constater qu'en l'état actuel de la technique, il n'existe pas de revêtement élastomère étanche et anti-adhérent qui soit parfaitement bien adapté aux joints de culasse et plus particulièrement aux joints de culasse métalliques et plus précisément encore aux joints de culasse multifeuille métalliques MLS. Cette remarque vaut également pour les précurseurs liquides non réticulés de ces revêtements élastomères.

Dans un tel contexte, l'un des objectifs essentiels de la présente invention est donc de proposer une composition silicone réticulable adaptée à l'imprégnation et/ou au revêtement de joints plats, notamment des joints de culasse (plus spécialement les joints métalliques MLS), qui remédient aux carences de l'art antérieur en satisfaisant mieux que ce dernier au cahier des charges susvisé et qui donne accès à un procédé de réalisation d'imprégnation et/ou de revêtement qui soit rapide, qui ne nécessite pas d'équipements sophistiqués, ni l'emploi de solvants toxiques et dangereux, ni de hautes températures et qui permette d'obtenir un revêtement silicone ou un vernis suffisamment adhérent sur le support du joint, suffisamment antiadhérent vis-à-vis de la culasse et du bloc moteur, étanche, dur, résistant à la rayure, aux solvants et aux fluides moteurs, et de surcroît stable à la température.

Un autre objectif essentiel de l'invention est de trouver un procédé de réalisation d'imprégnation et/ou de revêtement de joint plat, notamment de joint de culasse, de préférence de joint de culasse MLS, qui soit économique, simple à mettre en oeuvre, et qui permette d'obtenir un joint de culasse siliconé antiadhérent qui soit performant dans son environnement d'utilisation.

Un autre objectif essentiel de l'invention est de fournir un joint plat notamment un joint de culasse, de préférence un joint de culasse MLS, imprégné et/ou revêtu d'un silicone réticulé antiadhérent et compressible et présentant toutes les spécifications attendues et évoquées ci-dessus.

Une fois ces objectifs fixés, la demanderesse a eu le mérite de trouver, après de nombreuses études et expérimentations, que, de manière tout à fait surprenante et inattendue, il convient de mettre en oeuvre, dans le procédé de réalisation d'imprégnation et/ou de revêtement, un polyorganosiloxane A, un amorceur B de type borate d'onium ou borate de complexe organométallique, ainsi qu'un diluant réactif C comprenant les mêmes groupements fonctionnels de réticulation que le POS A. Cette association ABC est essentielle pour la réalisation, notamment, d'excellents vernis silicones pour joints de culasse MLS.

D'où il s'ensuit que la présente invention concerne un procédé de réalisation d'imprégnation et/ou de revêtement anti-adhérent et étanche mis en oeuvre à l'interface *bloc moteur*/*culasse* de moteurs et appliqué notamment sur des joints plats, en particulier des joints de culasse,
caractérisé en ce qu'il consiste essentiellement :
1 - à mettre en oeuvre une composition silicone comprenant :
   -A- 100 parties en poids d'au moins un polyorganosiloxane (POS) réticulable par voie cationique et/ou radicalaire et par l'intermédiaire de groupements fonctionnels de réticulation (GFR), ces GFR étant identiques ou différents entre eux et étant choisis parmi ceux comprenant au moins un motif fonctionnel de nature hétérocyclique ayant un ou plusieurs atomes électrodonneurs, de préférence O, S, N ou P, et/ou parmi ceux éthyléniquement insaturés et substitués par au moins un atome électrodonneur qui augmente la basicité du système π ;
   - B - de 0,01 à 10, de préférence 0,1 à 5 parties en poids d'au moins un sel amorceur (PA) formé par un borate d'onium d'un élément des groupes 15 à 17 de la classification périodique [Chem. & Eng. News, vol 63, N° 5, 26 du 4 Février 1985] ou d'un complexe organométallique d'un élément des groupes 4 à 10 de la classification périodique (même référence),
      *□ l'entité cationique* dudit borate étant choisie parmi :
      (1) - les sels d'onium de formule **(I)** :

         [(R¹)ₙ - A - (R²)ₘ]⁺ (I)

         formule dans laquelle :
         - A représente un élément des groupes 15 à 17 tel que par exemple I, S, Se, P ou N ;
         - R¹ représente un radical aryle carbocyclique ou hétérocyclique en C₆-C₂₀, ledit radical hétérocyclique pouvant contenir comme hétéroéléments de l'azote ou du soufre ;
         - R² représente R¹ ou un radical alkyle ou alkényle linéaire ou ramifié en C₁-C₃₀ ; lesdits radicaux R¹ et R² étant éventuellement substitués par un groupement alcoxy en C₁-C₂₅, alkyle en C₁-C₂₅, nitro, chloro, bromo, cyano, carboxy, ester, mercapto,
         - n est un nombre entier allant de 1 à v + 1, v étant la valence de l'élément A,
         - m est un nombre entier allant de 0 à v - 1 avec n + m = v + 1,
      (2) - les sels d'oxoisothiochromanium possédant la formule : 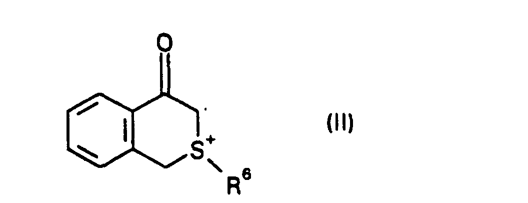 où le radical R⁶ représente un radical alkyle, linéaire ou ramifié, en C₁-C₂₀;
      (3) - les sels de sulfonium dans lesquelles l'entité cationique comprend :
         → 3.1.au moins une espèce polysulfonium de formule III.1. 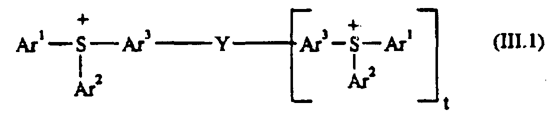 dans laquelle :
            - les symboles Ar¹, qui peuvent être identiques ou différents entre-eux, représentent chacun un radical monovalent phényle ou naphtyle, éventuellement substitué avec un ou plusieurs radicaux choisis parmi : un radical alkyle linéaire ou ramifié en C₁ - C₁₂, de préférence en C₁ - C₆, un radical alkoxy linéaire ou ramifié en C₁ - C₁₂, de préférence en C₁ - C₆, un atome d'halogène, un groupe -OH, un groupe -COOH, un groupe ester -COO-alkyle où la partie alkyle est un reste linéaire ou ramifié en C₁ - C₁₂, de préférence en C₁ - C₆,et un groupement de formule -Y⁴-Ar² où les symboles Y⁴ et Ar² ont les significations données juste ci-après,
            - les symboles Ar², qui peuvent être identiques ou différents entre eux ou avec Ar¹, représentent chacun un radical monovalent phényle ou naphtyle, éventuellement substitué avec un ou plusieurs radicaux choisis parmi : un radical alkyle linéaire ou ramifié en C₁-C₁₂, de préférence en C₁ - C₆, un radical alkoxy linéaire ou ramifié en C₁-C₁₂, de préférence en C₁ - C₆, un atome d'halogène, un groupe -OH, un groupe -COOH, un groupe ester -COO-alkyle où la partie alkyle est un reste linéaire ou ramifié en C₁-C₁₂, de préférence en C₁ - C₆,
            - les symboles Ar³, qui peuvent être identiques ou différents entre eux, représentent chacun un radical divalent phénylène ou naphtylène, éventuellement substitué avec un ou plusieurs radicaux choisis parmi : un radical alkyle linéaire ou ramifié en C₁-C₁₂, de préférence en C₁ - C₆, un radical alkoxy linéaire ou ramifié en C₁-C₁₂, de préférence en C₁ - C₆, un atome d'halogène, un groupe -OH, un groupe -COOH, un groupe ester -COO-alkyle où la partie alkyle est un reste linéaire ou ramifié en C₁-C₁₂, de préférence en C₁ - C₆,
            - t est un nombre entiers égal à 0 ou 1,
               avec les conditions supplémentaires selon lesquelles :
               + quand t = 0, le symbole Y est alors un radical monovalent Y¹ représentant le groupement de formule : 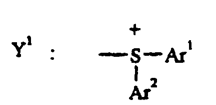 où les symboles Ar¹ et Ar² possèdent les significations données ci-avant,
               + quand t = 1 :
                  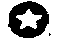 d'une part, le symbole Y est alors un radical divalent ayant les significations Y² à Y⁴ suivantes :
                     - Y² : un groupement de formule : 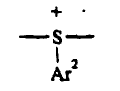 où le symbole Ar² possède les significations données ci-avant,
                     - Y³ : un lien valentiel simple,
                     - Y⁴ : un reste divalent choisi parmi : 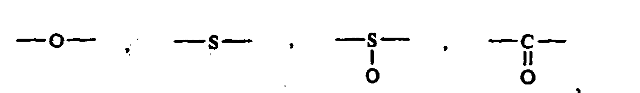 un reste alkylène linéaire ou ramifié en C₁-C₁₂, et un reste de formule ―Si(CH₃)₂O―,
                  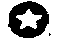 d'autre part, dans le cas uniquement où le symbole Y représente Y³ ou Y⁴, les radicaux Ar¹ et Ar² (terminaux) possèdent, outre les significations données ci-avant, la possibilité d'être reliés entre eux par le reste Y' consistant dans Y'¹ un lien valentiel simple ou dans Y'² un reste divalent choisi parmi les restes cités à propos de la définition de Y⁴, qui est installé entre les atomes de carbone, se faisant face, situés sur chaque cycle aromatique en position ortho par rapport à l'atome de carbone directement relié au cation S⁺ ;
         → 3.2. et/ou au moins une espèce monosulfonium possédant un seul centre cationique S⁺ par mole de cation et consistant dans la plupart des cas dans des espèces de formule : 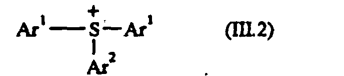
         dans laquelle Ar¹ et Ar² ont les significations données ci-avant à propos de la formule (III.1), incluant la possibilité de relier directement entre eux un seul des radicaux Ar¹ à Ar² selon la manière indiquée ci-avant à propos de la définition de la condition supplémentaire en vigueur quand t = 1 dans la formule (II), faisant appel au reste Y' ;
      (4) les sels organométalliques de formule (IV) :

         (L¹L²L³M)^{+q} (IV)

         formule dans laquelle :
         - M représente un métal du groupe 4 à 10, notamment choisi parmi du fer, manganèse, chrome, cobalt,
         - L¹ représente 1 ligand lié au métal M par des électrons π, ligand choisi parmi les ligands η³-alkyl, η⁵⁻ cyclopendadiènyl et η⁷ cycloheptratriènyl et les composés η⁶ - aromatiques choisis parmi les ligands η⁶-benzène éventuellement substitués et les composés ayant de 2 à 4 cycles condensés, chaque cycle étant capable de contribuer à la couche de valence du métal M par 3 à 8 électrons π,
         - L² représente un ligand lié au métal M par des électrons π, ligand choisi parmi les ligands η⁷-cycloheptatriènyl et les composés η⁶-aromatiques choisis parmi les ligands η⁶- benzène éventuellement substitués et les composés ayant de 2 à 4 cycles condensés, chaque cycle étant capable de contribuer à la couche de valence du métal M par 6 ou 7 électrons π,
         - L³ représente de 0 à 3 ligands identiques ou différents liés au métal M par des électrons σ, ligand(s) choisi(s) parmi CO et NO₂⁺ ; la charge électronique totale q du complexe à laquelle contribuent L¹, L² et L³ et la charge ionique du métal M étant positive et égale à 1 ou 2 ; □ *l'entité anionique* borate ayant pour formule :

            [BXₐ R_{b}]⁻

            formule dans laquelle :
            - a et b sont des nombres entiers allant pour a de 0 à 3 et pour b de 1 à 4 avec a + b = 4,
            - les symboles X représentent :
               ∗ un atome d'halogène (de préférence chlore, fluor) avec a = 0 à 3,
               ∗ une fonction OH avec a = 0 à 2,
            - les symboles R sont identiques ou différents et représentent :
               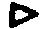 un radical phényle substitué par au moins un groupement électroattracteur tel que par exemple OCF₃, CF₃, NO₂, CN et/ou par au moins 2 atomes d'halogène (fluor tout particulièrement) ce lorsque l'entité cationique est un onium d'un élément des groupes 15 à 17,
               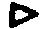 un radical phényle substitué par au moins un élément ou un groupement électroattracteur, notamment un atome d'halogène (fluor tout particulièrement), CF₃, OCF₃, NO₂, CN, et ce lorsque l'entité cationique est un complexe organométallique d'un élément des groupes 4 à 10,
               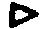 un radical aryle contenant au moins deux noyaux aromatiques tel que par exemple biphényle, naphtyle, éventuellement substitué par au moins un élément ou un groupement électroattracteur notamment un atome d'halogène (fluor tout particulièrement), OCF₃, CF₃, NO₂, CN quelle que soit l'entité cationique ;
   -C- 1 à 50, de préférence 1 à 35 parties en poids d'au moins un diluant réactif consistant dans un composé organique non organosilicique ou organosilicique comportant dans sa structure au moins un GFR tel que défini supra, et éventuellement au moins un groupement fonctionnel secondaire (GFS) différent d'un GFR, mais capable de réagir chimiquement avec un GFR ;
   -D- 0 à 10, de préférence 0,1 à 5 parties en poids d'au moins un pigment, de préférence un pigment noir, et plus préférentiellement encore le noir de carbone;
   -E- 0 à 100, de préférence 0 à 50 parties en poids d'une charge de nature minérale ;
   -F- 0 à 10, depréférence 0,01 à 1 parties en poids d'au moins un photosensibilisateur, de préférence sélectionné parmi les composés (poly)aromatiques (éventuellement métalliques) et/ou les composés hétérocycliques ;
   -G- 0 à 10⁻², de préférence 10⁻⁵ à 10⁻² partie en poids d'un stabilisateur consistant dans au moins un agent aminé stabilisant ;
   -H- 0 à 5, de préférence 0 à 2 parties en poids d'un promoteur d'adhérence de préférence choisi parmi les silanes alcoxylés et/ou époxydés;
2 - à appliquer cette composition sur un support (interface bloc moteur/culasse ou joint plat de culasse), et
3 - à faire réticuler la composition appliquée par activation photochimique et/ou thermique et/ou sous un faisceau d'électrons.

Cette invention est un perfectionnement de celle selon la demande WO-A- 98/29 498 dans laquelle on met en oeuvre une composition silicone réticulable par voie cationique comprenant un polyorganosiloxane POS A et un amorceur B, mais exempte du diluant C porteur de groupement(s) fonctionnel(s) GFR et éventuellement GFS.

Cette combinaison ABC est source de résultats avantageux et inattendus pour l'imprégnation et/ou le vernissage de joints plats, notamment de joints de culasse, en termes d'antiadhérence, d'adhésion sur le support (de préférence métallique) du joint d'étanchéité, de propriétés mécaniques, de résistance aux solvants et aux fluides moteurs et de tenue à la température.

Dans cette combinaison ABC, l'amorceur B se singularise par sa nature borate d'onium ou borate de sel organométallique avec un contre-anion borate du genre borophényle substitué par des groupements électroattracteurs, par exemple fluorés. Entre outre la composition liquide non réticulée utilisée dans le procédé selon l'invention est dotée d'une excellente stabilité à la conservation. Sa viscosité reste faible malgré la présence de l'amorceur. Cette stabilité s'observe pendant plusieurs jours, voire plusieurs mois après réalisation de la composition pour autant que celle-ci soit stockée à l'abri de la lumière. Cette composition liquide précurseur est également dotée d'une très bonne réactivité à température ambiante.

La composition silicone liquide non réticulée ABC, contenant éventuellement D et/ou E et/ou F et/ou G et/ou H, est facile à manipuler. Sa viscosité peut être modulée dans une large mesure en modifiant la masse molaire de l'huile POS A porteur de GFR et/ou du diluant C porteur de GFR et éventuellement de GFS, la concentration en amorceur B, de même que le ratio molaire GFR/POS A et (GFR + éventuellement GFS)/diluant C. Par ailleurs, il est à noter que la composition silicone liquide non réticulée ne comprend pas, de manière obligatoire, de solvant organique toxique et dangereux.

Le procédé selon l'invention est économique, simple, rapide et donc in fine productif et rentable. Il permet d'obtenir notamment des vernis sur des joints plats, notamment des joints de culasse et en particulier sur des joints de culasse métalliques de type multifeuilles MLS, présentant un bel aspect (absence de bulles et satisfaisant aux qualités requises d'antiadhérence d'étanchéité et de compressibilité. En outre, ce vernis réticulé possède de bonnes propriétés mécaniques, une résistance à l'abrasion, une tenue thermique, une tenue aux huiles et plus généralement aux produits agressifs tels que les liquides de refroidissement, tout à fait satisfaisantes.

Selon un mode préféré de mise en oeuvre du procédé selon l'invention, le support est un joint de culasse métallique, de préférence un joint de culasse multifeuilles métalliques de type MLS.

Il est avantageux dans le cadre de ce mode préféré de mise en oeuvre qu'il soit prévu selon le procédé de former un revêtement sur au moins l'une des faces d'au moins l'une des feuilles composant le joint de culasse multifeuilles métalliques, ce revêtement étant de préférence appliqué sur les deux faces externes du joint multifeuilles.

En pratique, il est préférable que chacune des feuilles du joint soit revêtue d'un revêtement silicone réticulé par activation photochimique et/ou thermique et/ou sous faisceau d'électrons à partir d'une composition ABC contenant éventuellement D et/ou E et/ou F et/ou G et/ou H, sur ses deux faces.

En entrant dans le détail sur la nature des différents constituants de la composition silicone de traitement mis en oeuvre dans le procédé selon l'invention, on précisera s'agissant des POS A que les motifs fonctionnels compris dans les groupements GFR, portés par les siliciums, sont sélectionnés dans le groupe de motifs fonctionnels suivants :
- une fonction éthyléniquement insaturée et activée comme (méth) acrylique, (méth)acrylate et alcényléther,
- époxyde,
- oxéthane.
- leurs mélanges.

En ce qui concerne le diluant C, les groupements GFR sont portés par des atomes de carbone ou de silicium et ils comprennent des motifs fonctionnels qui sont sélectionnés dans le groupe des motifs cités dans le paragraphe précédent. A noter que les GFR du diluant C peuvent être identiques ou différents des GFR du (ou des) POS A. En ce qui concerne le diluant C et les groupements optionnels GFS, ils sont portés là aussi par des atomes de carbone ou de silicium du diluant C, et ils comprennent des motifs fonctionnels qui sont sélectionnés dans le groupe des motifs suivants :
- hydroxy,
- alcoxy,
- carboxyle,
- leurs mélanges.

Plus préférentiellement encore, les POS A sont des époxysilicones et/ou des vinyléthersilicones qui sont :
→ soit linéaires ou sensiblement linéaires et constitués de motifs de formule **(I)**, terminés par des motifs de formule **(II)**,
→ soit cycliques et constitués par des motifs de formule **(II)**, 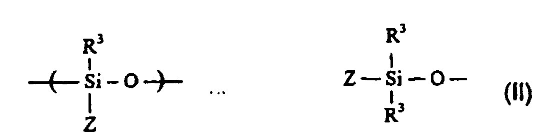 formules dans lesquelles :
   - les symboles R³ sont semblables ou différents et représentent :
      - soit un radical hydroxy,
      - soit un radical alkyle linéaire ou ramifié en C₁-C₁₈, éventuellement substitué, avantageusement par un ou des halogènes et/ou un radical hydroxy, les radicaux alkyles éventuellement substitués préférés étant : méthyle, éthyle, propyle, octyle et 3,3,3 trifluoropropyle,
      - soit un radical alcényle en C₂-C₈,
      - soit un radical cycloalkyle en C₅-C₈, éventuellement substitué,
      - soit un radical aryle ou aralkyle, éventuellement substitué :
         - notamment par des halogènes et/ou des alcoxyles,
         - les radicaux phényle, xylyle, tolyle et dichlorophényle étant tout particulièrement sélectionnés,
      - et, plus préférentiellement encore, au moins 60 % molaire des radicaux R³ étant des méthyles,
   - les symboles Z sont semblables ou différents et représentent :
      - soit le radical R³,
      - soit un groupement GFR correspondant à un reste époxyde ou vinyléther relié au silicium par l'intermédiaire d'un radical divalent contenant, avantageusement, de 2 à 20 atomes de carbone et comportant éventuellement un hétéroatome, l'un au moins des symboles Z correspondant à un groupement GFR.

Comme exemples de groupements organofonctionnels GRF du type époxy, on peut citer ceux de formule suivante :

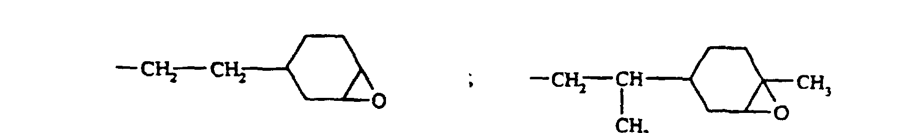

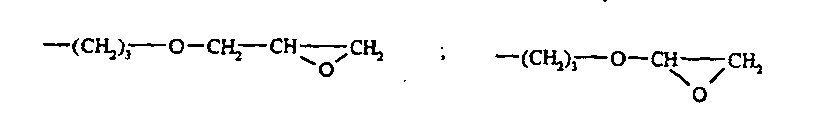

S'agissant des groupements organofonctionnels GRF du type vinyléther, on peut mentionner, e. g., ceux contenus dans les formules suivantes : 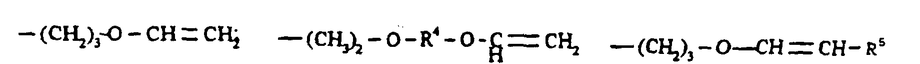 avec R⁴ =
- alkylène linéaire ou ramifié en C₁-C₁₂, éventuellement substitué,
- ou arylène, de préférence phénylène, éventuellement substitué, de préférence par un à trois groupements alkyles en C₁-C₆ ;
avec R⁵ = alkyle linéaire ou ramifié en C₁-C₆.

Les polyorganosiloxanes époxy ou vinyloxyfonctionnels préférés sont décrits notamment dans les brevets DE-A-4 009 889 ; EP-A-0 396 130 ; EP-A-0 355 381 ; EP-A-0 105 341 ; FR-A-2 110 115 ; FR-A-2 526 800.

Les polyorganosiloxanes époxy fonctionnels peuvent être préparés par réaction d'hydrosilylation entre des huiles à motifs Si-H et des composés époxyfonctionnels, tels que par exemple le vinyl-4 cyclohexèneoxyde, l'allylglycidyléther.

Les polyorganosiloxanes vinyloxyfonationnels peuvent être préparés par réaction d'hydrosilylation entre des huiles à motifs Si-H et des composés vinyloxyfonctionnels, tels que par exemple l'allylvinyléther, l'allylvinyloxyéthoxybenzène.

Plus préférentiellement encore, les POS A sont des époxysilicones de formules (**A.1**), (**A.2**) et (**A.3**) suivantes : 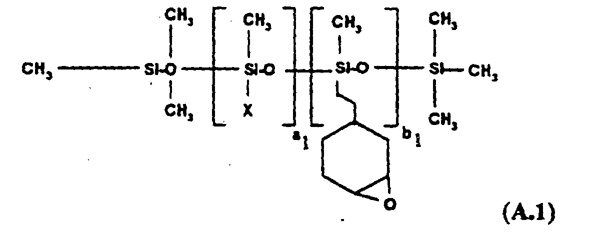 avec X = CH₃ ; phényle ; cycloalkyle C₅ - C₈; alkyle C₁-C₁₈ ; alcényle C₂ - C₈ ; -OH; H ; -CH₂-CH₂-CH₂-OH ; -CH₂-CH₂-CF₃ ; -(CH₂)ₙ-CF₃, n = 1 à 20 ; 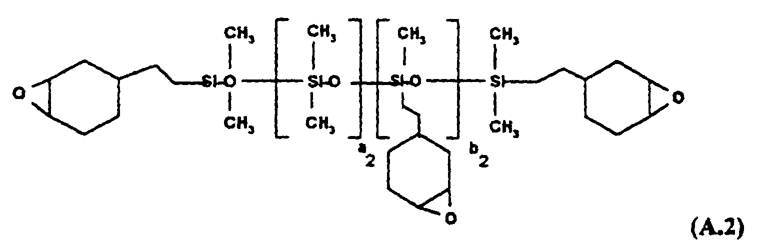
- a₁, a₂ et b₁, b₂ étant définis comme suit dans ces formules (**A.1**) et (**A.2**)
   1 ≤ a₁, a₂ 1 ≤ b₁, b₂ de préférence 1 ≤ a₁, a₂ ≤ 5 000 1 ≤ b₁, b₂ ≤ 500
   et plus préférentiellement
   encore 1 ≤ a₁, a₂ ≤ 1 000 1 ≤ b₁, b₂ ≤ 100 ;
- a₂, b₂ étant = 0 dans la formule (**A.2**) pour donner le disiloxane époxydé (**A.3**)

Selon une autre caractéristique avantageuse de l'invention, le ou les POS (A) a (ont) une viscosité η (exprimée en mPa.s à 25° C) comprise entre :
→ 100 et 10.000,
→ de préférence 200 et 5.000,
→ et plus préférentiellement encore entre 300 et 3.000.

Ces valeurs de viscosité concernent aussi bien les POS linéaires que les POS cycliques susceptibles d'être mis en oeuvre conformément à l'utilisation selon l'invention. La viscosité dynamique à 25° C, de tous les polymères silicones considérés dans le présent exposé, peut être mesurée à l'aide d'un viscosimètre BROOKFIELD, selon la norme AFNOR NFT 76 102 de février 1972. La viscosité dont il est question dans le présent exposé est la viscosité dynamique à 25° C, dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.

Conformément à l'invention, il est parfaitement envisageable de mettre en oeuvre un mélange de différents POS A à motifs de formule **(I)** et **(II)**, tels que définis ci-dessus (linéaires et/ou cycliques).

Suivant une caractéristique préférée de l'invention, les amorceurs B sont e.g. : les borates d'onium décrits dans la demande de brevet européen EP-A- 0 562 922 ou dans la demande PCT/WO-A- 98/29498 (dont les contenus sont intégralement incorporés au présent exposé par référence). Plus précisément encore, on peut mettre en oeuvre en pratique l'amorceur de formule suivante :

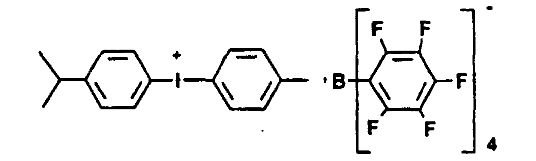

En pratique, les amorceurs de l'utilisation suivant l'invention sont préparés de manière très simple par dissolution du borate d'onium ou de complexe organométallique, de préférence d'onium, se présentant sous forme solide (poudre) dans un solvant.

Selon une alternative concernant le borate d'onium, ce dernier peut être préparé directement dans le solvant, à partir d'un sel (e.g. chlorure) du cation (iodonium) et d'un sel (par exemple de potassium) de l'anion borate.

Sans sortir pour autant du cadre de la présente invention, on mentionnera que l'amorceur (PA) peut être employé en solution dans un solvant organique, de préférence choisi parmi les solvants donneurs de protons et plus préférentiellement encore parmi le groupe suivant : alcool isopropylique, alcool benzylique, diacétone-alcool, lactate de butyle, esters, et leurs mélanges. Comme cela est revendiqué dans le brevet français N° 2 724 660, les solvants organiques donneurs de protons et à caractère aormatique (alcool benzylique), se comportent comme des accélérateurs de réticulation. Il est donc avantageux de s'en servir pour mettre en solution, le photoamorceur.

Il convient de préciser que par quantité catalytique efficace de PA, on entend, au sens de l'invention, la quantité suffisante pour amorcer la réticulation.

Dans la mesure où comme indiqué supra, l'amorceur est dissous dans un solvant polaire, ledit solvant est utilisé en quantité telle que le titre de la solution obtenue en amorceur soit compris entre 1 et 50 % en poids, de préfence entre 10 et 30 % en poids, et plus préférentiellement encore entre 15 et 25 % en poids.

L'incorporation du PA en solution dans la composition comprenant le POS à teneur molaire en GRF donnée, se fait à raison de 0,01 à 10 % en poids de PA par rapport au(x) POS A, de préférence 0,1 à 5 % en poids et plus préférentiellement de l'ordre de 0,2 à 2 % en poids.

Concernant le ou les diluants réactifs C, il est (ou ils sont) choisi(s) de préférence :
→ parmi les composés organiques non organosiliciques (C₁) à groupements réactifs GFR + éventuellement GFS ayant les formules suivantes :

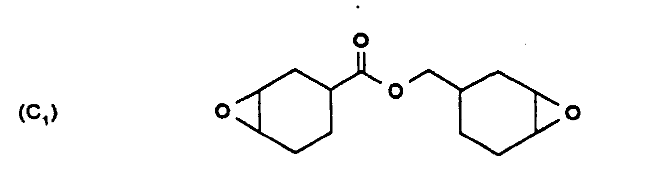

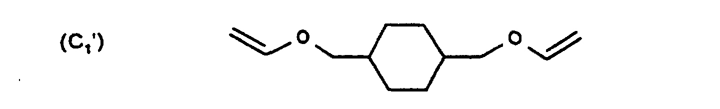

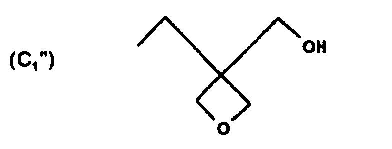

   (C₁''') HO-(CH₂)₄-O-CH=CH₂
→ et/ou parmi les composés organosiliciques (C₂) à groupements réactifs GFR + éventuellement GFS ayant les formules suivantes : 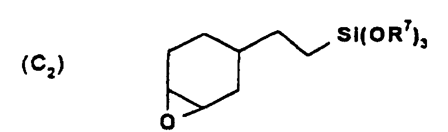
avec R⁷ = alkyle C₁-C₁₀, de préférence méthyle, éthyle, propyle, 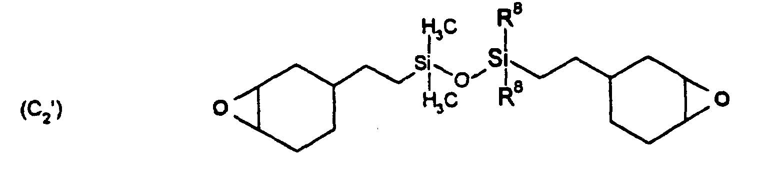 avec R⁸ représentant indépendamment un alkyle en C₁-C₁₀, de préférence un méthyle.

Ce diluant réactif C est constitué de petites molécules réticulables aptes à réagir entre elles et/ou avec les groupements GFR des POS A, par l'intermédiaire de leurs groupements fonctionnels GFR + éventuellement GFS. Ces composés diluants réactifs C forment ainsi des réseaux de réticulation qui peuvent être au moins en partie interpénétrés avec les réseaux de réticulations formés après réaction des GFR des POS A. Ces diluants réactifs C ont vocation à amener de la fluidité à la composition liquide non réticulé mis en oeuvre dans le procédé selon l'invention. Ce sont des abaisseurs de viscosité qui facilitent la manipulation de la composition liquide destinée à être appliqué sur le joint de culasse en particulier le joint de culasse MLS avant réticulation, de préférence sous UV, pour former un film.

Suivant une disposition préférée du procédé selon l'invention, le diluant C est choisi de telle sorte qu'il présente une température d'ébullition θéb ≥ 100°C, de préférence 100°C ≤ θéb ≤ 300° C à pression atmosphérique normale et une viscosité à 25° C η ≤ 100 mPa.s, de préférence 1 ≤ η ≤ 100 mPa.s.

Concernant le pigment D, on met en oeuvre conformément au procédé selon l'invention un pigment noir et plus préférentiellement encore du noir de carbone. Le noir de carbone préféré est celui présentant une faible granulométrie, avantageusement une granulométrie moyenne inférieure à 100 nanomètres et/ou ayant un caractère neutre ou acide, le pH étant compris avantageusement entre 1 et 7.

A titre d'exemples, on peut citer les noir de carbones commerciaux suivants : Mogul L, Regal 400R ou Regal 660 R commercialisés par CABOT, et les produits Spécial 250 ou Printex 75 commercialisés par DEGUSSA.

Il est préférable de mettre en oeuvre le noir de carbone à un taux compris entre 0,1 et 5 % en poids, et plus préférentiellement compris entre 0,5 et 2 % en poids par rapport aux POS A.

L'invention n'est pas limitée à l'emploi du noir de carbone comme pigment, il est concevable de mettre en oeuvre des pigments de couleur différentes comme par exemple le dioxyde de titane, la phtalocyanine, la benzymidadozolone, les naphtoles, les diazopirazolones, les pigments jaunes diarylides ou monoarylides.

Les éventuelles charges E sont des charges siliceuses comme par exemple des silices de combustion traitées à l'hexaméthyldisilasane ou à l'octaméthylcyclotétrasiloxane. La surface spécifique de ces silices de combustion ainsi traitées varie classiquement dans l'intervalle de 100 à 400 m²/g. La silice de précipitation est un autre exemple de charge siliceuse E que l'on peut mettre en oeuvre dans le procédé selon l'invention. Hormis ces charges siliceuses, on peut utiliser aussi des charges constituées par : des fibres synthétiques (polymères) ou naturelles broyées ; des fibres minérales ou des poudres de carbure de silicium, d'oxycarbure de silicium, de nitrocarbure de silicium ; du carbonate de calcium ; du talc ; de l'argile ; ou du dioxyde de titane. De préférence, les éventuelles charges sont des charges siliceuses à base de silice de combustion et/ou de silice de précipitation.

Concernant les éventuels photosensibilisateurs F, ils peuvent être sélectionnés parmi les produits (poly)aromatiques -éventuellement métalliques- et les produits hétérocycliques, et de préférence dans la liste de produits suivants : phénothiazine, tétracène, pérylène, anthracène, diphényl-9,10-anthracène, thioxanthone, benzophénone, acétophénone, xanthone, fluorénone, anthraquinone, 9,10-diméthylanthracène, 2-éthyl-9,10-diméthyloxyanthracène, 2,6-diméthylnaphtalène, 2,5-diphényl-1-3-4-oxadiazole, xanthopinacol, 1,2-benzanthracène, 9-nitro-anthracène, et leurs mélanges.

Plus spécialement, il peut s'agir d'un produit à base de thioxanthone :

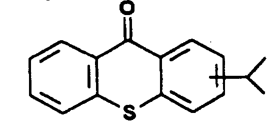

Il est préférable conformément à l'invention de stabiliser la formulation mise en oeuvre par un inhibiteur G aminé. L'agent aminé utilisable peut être une amine linéaire secondaire ou tertiaire, ou une amine cyclique encombrée stériquement de type "HALS" comprenant par exemple, dans sa structure, au moins un reste pipéridinyle N-alkyl substitué. Comme exemples d'agents aminés, on peut citer ceux décrité dans la demande de brevet PCT/WO-A-98/07798 ; le contenu de cette demande est d'ailleurs intégralement incorporé au présent exposé par référence. Les amines cycliques encombrées de type "HALS" conviennent bien.

La composition silicone liquide non réticulée mise en oeuvre dans le procédé selon l'invention, peut également comprendre un promoteur d'adhérence H, de préférence choisi parmi les silanes alcoxylés et/ou époxydés et leurs mélanges. A titre d'exemples de promoteurs H, on peut citer :
- le 5,6-époxy-3-éthylcyclohexyltriéthoxysilane de formule : 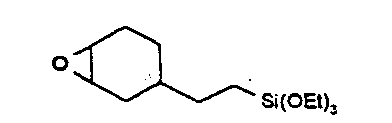
- ou bien encore le 3-glycidoxypropyle triméthoxysilane (GLYMO) : 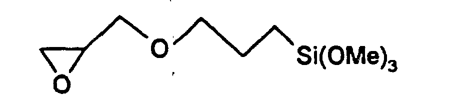
- ou bien encore le vinyltriméthoxysilane (VTMO) de formule :

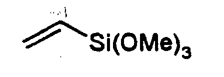

Selon une variante avantageuse du procédé conforme à l'invention préalablement à l'étape 1, on enduit le support à revêtir à l'aide d'un primaire d'adhérence de préférence du type de ceux comprenant au moins un composé choisi dans le groupe comportant :
- des silanes alcoxylés porteurs d'au moins une insaturation éthylénique et/ou d'au moins une fonction époxyde, de préférence le triméthoxysilane de γ-glycidoxypropyle (GLYMO) et/ou le triméthoxysilane de γ-méthacryloxypropyle et/ou le vinyltriméthoxysilane (VTMO) ;
- des (méth)acrylates de préférence le polyméthacrylate de méthyle,
- des chélates et/ou des alcoxydes métalliques, de préférence les titanates d'alkyle, et plus préférentiellement encore le titanate de butyle ou de propyle ;
- des compositions silicones réticulables et précurseurs d'élastomères silicones, de préférence de type élastomères silicones RTV de polyaddition.

Dans le cadre d'un primaire d'adhérence consistant dans une composition de type élastomères silicones RTV de polyaddition, on peut utiliser les compositions appartenant aux groupes (i), (2i) et (3i) tels que définis ci-après :
(i) composition élastomère silicone d'enduction de type RTV comprenant : au moins un POS I de type SiVi ; au moins un POS II de type SiH ; un catalyseur d'hydrosilylation au platine III ; un promoteur d'adhérence IV comprenant au moins un organosilane alcoxylé IV.1 contenant par molécule au moins un groupe vinyle (vinyltriméthoxysilane), au moins un composé IV.2 organosilicié comprenant au moins un radical époxy (3-glycidoxypropyl triméthoxysilane GLYMO) et au moins un chélate IV.3 de métal M et/ou un alcoxyde métallique (titanate de butyle) ; éventuellement une charge minérale ; éventuellement au moins un inhibiteur de réticulation ; éventuellement au moins une résine polyorganosiloxane ; et éventuellement des microsphères creuses organiques ou minérales. Ces compositions silicones sont décrites dans les demandes de brevets FR-A-2.719.598 , WO-A-98/05723 et WO-A-99/02.592 ;
(ii) élastomère silicone RTV de polyaddition obtenu à partir d'une composition comprenant des POS I de type SiVi et des POS II de type SiH, ainsi qu'une charge particulaire obrenue par traitement à l'aide d'un agent de compatibilisation introduit dans le milieu de préparation :
   - d'une part, avant et/ou sensiblement simultanément à la mise en présence d'une partie de l'huile silicone mise en oeuvre avec une partie de la charge particulaire, cette introduction d'agent de compatibilisation s'opérant en une ou plusieurs fois pour une fraction d'agent de compatibilisation représente au plus 8 % en poids sec de la charge totale particulaire ;
   - et, d'autre part, après cette mise en présence POS / charge. L'agent de compatibilisation est l'hexaméthyldisilansane HMDZ. L'huile SiVi est une polydiméthylsiloxane α,ω-dihydrogéno et une huile PDMS polyhydrogéno. Cette composition élastomère (ii) RTV réticulable par polyaddition et comprenant une charge particulaire compatibilisée de manière particulière à l'HMDZ, est décrite en détail dans la demande de brevet WO-A-98/58.997 ;
(3i) revêtement élastomère silicone RTV réticulé par polyaddition et obtenu à partir d'une composition comprenant :
   (1) au moins un polyorganosiloxane présentant, par molécule, au moins deux groupes alcényles, en C₂-C₆ liés au silicium (e.g. PolyDiméthylSiloxane (PDMS-α,ω vinylée) ;
   (2) au moins un polyorganosiloxane présentant, par molécule, au moins deux atomes d'hydrogène liés au silicium (e.g. PDMS α,ω dihydrogéno et PDMS polyhydrogéno),
   (3) une quantité catalytiquement efficace d'au moins un catalyseur, composé d'au moins un métal appartenant au groupe du platine,
   (4) un promoteur d'adhérence ternaire consistant en :
      (4.1.) au moins un organosilane alcoxylé contenant, par molécule, au moins un groupe alcényle en C₃-C₆, (e.g. : triméthoxysilane γ méthacryloxypropylé)
      (4.2.) au moins un composé organosilicié comprenant au moins un radical époxy, (e.g. : triméthoxysilane de γ glycidoxypropyle)
      (4.3.) au moins un chélate de métal M et/ou un alcoxyde métallique de formule générale : M(OJ)n, avec n = valence de M et J = alkyle linéaire ou ramifié en C₁-C₈, M étant choisi dans le groupe formé par : Ti, Zr, Ge, Li, Mn, Fe, Al et Mg (e.g. : titanate de butyle).
   (5) une charge siliceuse renforçante traitée in situ par un agent de compatibilisation (e.g. : HMDZ) en présence de polyorganosiloxane (1),
   (6) un polyorganosiloxane qualifié d'allongeur et présentant des motifs siloxyles terminaux à fonctions hydrogèno,
   (7) éventuellement un neutralisant,
   (8) éventuellement un inhibiteur de réticulation et/ou autre(s) additif(s) en usage dans ce type de compositions (e.g. : éthynylcyclohexanol),
   (9) et éventuellement des charges microsphériques creuses inorganiques expansées ou expansables.

Les compositions selon (3i) sont décrites dans la demande de brevet français déposée le 23 décembre 1998 sous le n° d'enregistrement national 98/16510.

L'application d'une couche de primaires sur le support constitué par le joint plat, notamment par le joint de culasse, permet d'améliorer l'adhésion du revêtement silicone sélectionné conformément à l'invention.

S'agissant des compositions de primaires comprenant des silanes alcoxylés tels que le GLYMO ou le VTMO, il est possible, lorsque l'on souhaite appliquer des couches dont l'épaisseur se rapproche de l'échelle moléculaire, c'est-à-dire une épaisseur inférieure à 1 µm, de les utiliser pour l'application sous forme de solution dans un solvant organique, de préférence un alcool, un éther ou une cétone, cette dernière étant particulièrement préférée. Comme exemple de cétone adapté comme solvant de primaire, on peut citer la méthyléthylcétone (MEK). Les concentrations en silane alcoxylés des compositions de primaires sous forme de solution, sont comprises entre 0,1 et 10, de préférence entre 0,1 et 5 et plus préférentiellement encore entre 0,5 et 2 %.

Il est possible d'avoir recours à d'autres additifs connus dans ce genre d'application des compositions silicones réticulables par voie cationique. A ce propos, on peut évoquer non limitativement :
- les modulateurs d'adhérence (résine ou polymère linéaire silicone portant par exemple des fonctions vinylépoxyvinyléther ou alcool) e.g. ceux divulgués dans la demande de brevet européen N° 0 738 769 ;
- un ou plusieurs accélérateurs de polymérisation et/ou réticulation de préférence choisis parmi les esters d'acide carboxylique hydroxylés liquides à température ambiante.

En pratique, l'application de la composition silicone non réticulée sur le support joint plat, notamment joint de culasse, .est réalisé par tout moyen connu et approprié comme par exemple les techniques à la racle ou au cylindre d'enduction.

Avantageusement le taux de dépôt est compris entre 2,5 et 250 g/m2 de surface à enduire, et de préférence entre 5 et 100 g/m².

Selon une modalité préférée, la réticulation de la composition appliquée sur le support est réalisé par un apport d'énergie qui est fournie par un rayonnement UV pris seul ou en association avec un rayonnement infra-rouge (IR).

Ce rayonnement UV présente une longueur d'onde comprise, par exemple, entre 200 et 400 nanomètres, de préférence entre 254 et 360 nanomètres.Le rayonnement IR présente une longueur d'onde comprise, par exemple, entre 1 et 10 µm de préférence entre 1 et 4 µm. La durée des radiations peut être courte, elle est généralement inférieure à 1 s. Pour les très faibles épaisseurs de revêtement, elle est même de l'ordre de quelques centièmes de seconde.

Conformément à l'invention, on observe que la réticulation effectuée est excellente, même en l'absence de tout chauffage.

En outre il va de soi qu'on peut régler le temps de durcissement, notamment par le nombre de lampes UV + éventuellement IR utilisées par la durée d'exposition aux UV + éventuellement IR et par la distance entre la composition et la (ou les) lampe(s) UV + éventuellement IR.

Concernant les supports joints de culasse métallique de type joints multifeuilles MLS, les taux de dépôt sont compris entre 10 et 50 g/m².

Le procédé selon l'invention est avantageux en ce qu'il ne requiert peu ou pas de solvant organique. Il en résulte une pollution et une économie notable. En outre, la réticulation est rapide, ce qui permet d'obtenir de hautes productivités. Par ailleurs, le mode d'activation de la réticulation n'est pas progressive pour une majorité de support et ne nécessite pas une grande consommation énergétique. Enfin et surtout, la simplicité du procédé sur le plan méthodologique et sur le plan du dispositif limite significativement le coût des investissements industriels nécessaires pour les fabricants de joints de culasse.

On rappellera également que le procédé selon l'invention permet la sélection d'une composition silicone liquide précurseur appropriée, permet d'obtenir les revêtements pour interface bloc *moteur*/*culasse* qui sont anti-adhérents, qui sont parfaitement du support de préférence métallique constitué par le joint de culasse, qui sont étanches et qui ont des propriétés mécaniques de dureté et de résistance à la rayure excellente, qui résiste aux solvants et aux fluides moteurs et enfin qui sont stables à la température.

Les exemples qui suivent permettront de mieux comprendre le procédé selon l'invention et mettent en lumière tous les avantages et les variantes de mise en oeuvre dudit procédé.

### EXEMPLES

### PRODUITS MIS EN OEUVRE

On réalise des formulations de vernis photoréticulables à partir des polymères et composés suivants :

### A/ Polyorganosiloxanes:

On utilise des polymères de formule : 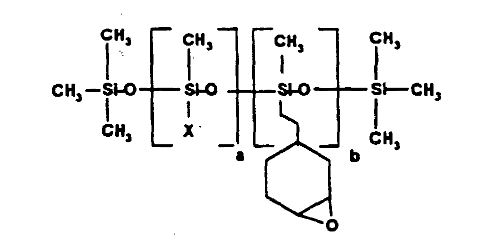 **A**_{**1**} / : x=CH₃ ; a =70 ; b=7
**A**_{**2**} / : x=CH₃ ; a =444 ; b=35

### B/Amorceur :

On utilise un composé de formule:

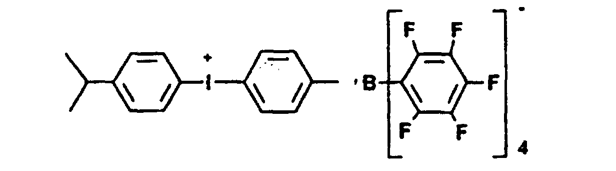

Cet amorceur B est sous forme d'une solution à 18 % en poids dans l'alcool isopropylique.

### C/ Diluant réactif :

On utilise uncomposé de formule :

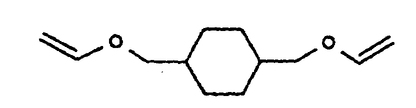

### D/ Pigment :

On utilise un pigment noir du type noir de carbone, commercialisépar la société DEGUSSA sous la dénomination Spécial 250.

### E/Charge minérale :

On utilise une silice de combustion traitée à l'octaméthylcyclotétrasiloxane (silice ayant une surface spécifique de 300 m²/g).

### F/ Photosensibilisateur :

On utilise l'isopropylthioxanthone de formule :

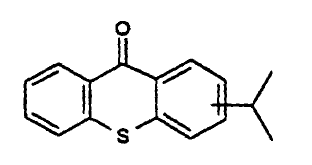

### G - Stabilisateur :

On utilise le composé aminé de formule :

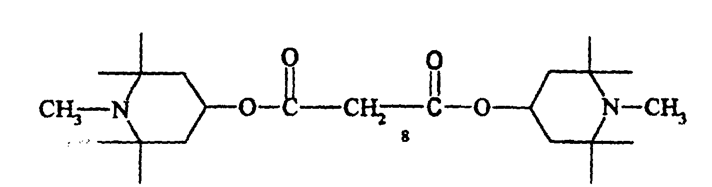

Dans les exemples qui suivent on décrit l'obtention d'une formulation directement exploitable pour la réalisation de joints de culasse multifeuilles.

### Préparation

1 - Sous agitation le noir de carbone D est incorporé dans l'huile silicone époxydée A1 jusqu'à obtention d'une dispersion homogène (30 min).
2 - Cette dispersion est ensuite passée au broyeur.
3 - Sous agitation, on incorpore progressivement la silice E à l'huile silicone ép oxydée A2.
4 - Toujours sous agitation on charge le 1,4-cyclohexanediméthanoldivinyléther = diluant réactif C.
5 - On charge enfin sous agitation la base pigmentaire préparée aux étapes 1 et 2, puis l'amorceur B et le photosensibilisateur F et on agite vigoureusement 15 minutes supplémentaires.
6 - On stocke la composition liquide dans un récipient à l'abri de la lumière.

Le stabilisateur G est incorporé au préalable dans l'huile silicone époxydée A1.

### EXEMPLE 1

On réalise un revêtement de plaque MLS de type acier ou inox.

A l'aide de la technique de la barre de Meyer, on a étalé en un passage une quantité de 15 g/m² de la composition suivante :
- A₁ -30 parts en poids,
- A₂ -36 parts en poids,
- B - 3 parts en poids,
- C -20 parts en poids,
- D - 1 part en poids,
- E - 10 parts en poids,
- F - 0,0198 part en poids,
- G - 0,004 part en poids.

Les supports métalliques (acier ou inox) sont préalablement primairisés par une solution de glycidylpropyl triméthoxysilane (GLYMO) à 1 % en poids dans la méthyléthylcétone et chauffés à 200°C pendant 30 minutes. La face enduite est irradiée à une vitesse de 10 m/min, à l'aide d'une lampe UV au mercure dopé au gallium de 120 W/cm de puissance. Le revêtement de coloration noire est adhérent sur le support, résistant à la température, aux huiles moteurs ainsi qu'au liquide de refroidissement (cahier des charges constructeurs) et présente une bonne résistance aux solvants ainsi qu'au scratch test.

### EXEMPLE 2

On réalise un revêtement de plaque MLS de type acier ou inox.

On applique de la même façon que pour l'exemple 1 : 30 g/m² de la même formule que pour l'exemple 1.

L'ensemble des propriétés mesurées sont rassemblées dans le tableau suivant :

| Caractéristiques | | Exemple 1 | Exemple 2 |
|---|---|---|---|
| Epaisseur | | 15 µm | 30 µm |
| Couleur | | Noir | noir |
| Conditions de réticulation | | Réticulation UV | réticulation UV |
| Vitesse max. | | 10 m/min | 10 m/min |
| Résistance solvant MEK (Méthyléthycétone) | (1) | > 200 | > 200 |
| Dureté Shore A | (2) | 70 | 70 |
| Adhésion sur métal | | primaire | primaire |
| Propriétés d'anti-adhérence | (3) | 0,195 | 0,205 |
| Scratch test (4) | | 60 g | 120 g |
| Test "Crosshatch" | (5) | | |
| Résistance en température (70h/200°C) | | Crosshatch 0-1 | Crosshatch 0-1 |
| Résistance aux huiles (70h/150°C) | | Crosshatch 1 | Crosshatch 1 |
| Résistance au liquide de refroidissement (70 /100°C) | | Crosshatch 4 | Crosshatch 4 |

| | | | |
|---|---|---|---|
| (1) Résistance à la MEK : on mesure la résistance au solvant du revêtement obtenu parès séchage de films de 12 µm sur une barre d'enduction manuelle de référence n° 2 de la société Erichsen, en notant le nombre d'aller-retours nécessaires effectués à l'aide d'un chiffon imbibé de solvant pour désagréger la couche de revêtement après 24 heures de séchage. | | | |
| (2) La mesure de la dureté Shore A est réalisée selon les indications de la norme DIN 53505. | | | |
| (3) Le test d'anti-adhérence est réalisé selon les indications de la norme ASTM F 607-84. Dans ce test, on mesure (notamment) la contrainte à la rupture, en MPa, au moment du décollement de deux surfaces revêtues après compression 72 h à 120°C. | | | |
| (4) Le Scratch test consiste à mesurer l'aptitude du revêtement à être rayée par une pointe diamant lestée par des poids d'ordre croissant. Ce test est réalisé selon les indications de la norme AFNOR NFT 51-113 (août 1976). | | | |
| (5) Le test "Crosshatch" consiste à rayer le revêtement en effectuant un quadrillage avec un peigne, puis à observer l'état de surface après collage et décollage d'un ruban adhésif sur le support ; si aucun écaillage ne s'est produit l'état de surface est indicé "0" ; si l'écaillage représente plus de 65 % de la surface du quadrillage, l'état de la surface est indicé "5". Ce test est réalisé après conditionnement des échantillons en température, dans l'huile chaude ainsi que dans du liquide de refroidissement. Ce test est réalisé selon les indications de la norme AFNOR NF T 30-038. Le ruban adhésif utilisé est un ruban adhésif de type silicone PSA. | | | |

## Revendications

1. Procédé de réalisation d'imprégnation et/ou de revêtement anti-adhérent et étanche mis en oeuvre à l'interface *bloc moteur*/*culasse* de moteurs et appliqué notamment sur des joints plats, en particulier des joints de culasse,
**caractérisé en ce qu'**il consiste essentiellement :
1 - à mettre en oeuvre une composition silicone comprenant :
-A- 100 parties en poids d'au moins un polyorganosiloxane (POS) réticulable par voie cationique et/ou radicalaire et par l'intermédiaire de groupements fonctionnels de réticulation (GFR), ces GFR étant identiques ou différents entre eux et étant choisis parmi ceux comprenant au moins un motif fonctionnel de nature hétérocyclique ayant un ou plusieurs atomes électrodonneurs et/ou parmi ceux éthyléniquement insaturés et substitués par au moins un atome électrodonneur qui augmente la basicité du système π ;
- B - de 0,01 à 10 parties en poids d'au moins un sel amorceur (PA) formé par un borate d'onium d'un élément des groupes 15 à 17 de la classification périodique [Chem. & Eng. News, vol 63, N° 5, 26 du 4 Février 1985] ou d'un complexe organométallique d'un élément des groupes 4 à 10 de la classification périodique (même référence),
*□ l'entité cationique* dudit borate étant choisie parmi :
(1) - les sels d'onium de formule **(I)** :
[(R¹)ₙ - A - (R²)ₘ]⁺ (I)
formule dans laquelle :
• A représente un élément des groupes 15 à 17 ;
• R¹ représente un radical aryle carbocyclique ou hétérocyclique en C₆-C₂₀, ledit radical hétérocyclique pouvant contenir comme hétéroéléments de l'azote ou du soufre ;
• R² représente R¹ ou un radical alkyle ou alkényle linéaire ou ramifié en C₁-C₃₀ ; lesdits radicaux R¹ et R² étant éventuellement substitués par un groupement alcoxy en C₁-C₂₅, alkyle en C₁-C₂₅, nitro, chloro, bromo, cyano, carboxy, ester, mercapto,
• n est un nombre entier allant de 1 à v + 1, v étant la valence de l'élément A,
• m est un nombre entier allant de 0 à v - 1 avec n + m = v + 1,
(2) - les sels d'oxoisothiochromanium possédant la formule : 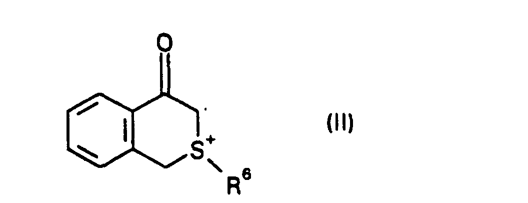 où le radical R⁶ représente un radical alkyle, linéaire ou ramifié, en C₁-C₂₀;
(3) - les sels de sulfonium dans lesquelles l'entité cationique comprend :
→ 3.1.au moins une espèce polysulfonium de formule III.1. 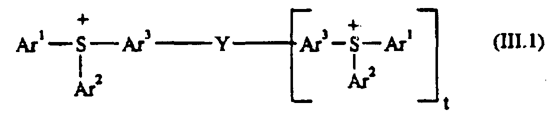 dans laquelle :
- les symboles Ar¹, qui peuvent être identiques ou différents entre-eux, représentent chacun un radical monovalent phényle ou naphtyle, éventuellement substitué avec un ou plusieurs radicaux choisis parmi : un radical alkyle linéaire ou ramifié en C₁ - C₁₂, un radical alkoxy linéaire ou ramifié en C₁ - C₁₂, un atome d'halogène, un groupe -OH, un groupe -COOH, un groupe ester -COO-alkyle où la partie alkyle est un reste linéaire ou ramifié en C₁ - C₁₂, et un groupement de formule -Y⁴-Ar² où les symboles Y⁴ et Ar² ont les significations données juste ci-après,
- les symboles Ar², qui peuvent être identiques ou différents entre eux ou avec Ar¹, représentent chacun un radical monovalent phényle ou naphtyle, éventuellement substitué avec un ou plusieurs radicaux choisis parmi : un radical alkyle linéaire ou ramifié en C₁-C₁₂, un radical alkoxy linéaire ou ramifié en C₁-C₁₂, un atome d'halogène, un groupe -OH, un groupe -COOH, un groupe ester -COO-alkyle où la partie alkyle est un reste linéaire ou ramifié en C₁-C₁₂,
- les symboles Ar³, qui peuvent être identiques ou différents entre eux, représentent chacun un radical divalent phénylène ou naphtylène, éventuellement substitué avec un ou plusieurs radicaux choisis parmi : un radical alkyle linéaire ou ramifié en C₁-C₁₂, un radical alkoxy linéaire ou ramifié en C₁-C₁₂, un atome d'halogène, un groupe -OH, un groupe -COOH, un groupe ester -COO-alkyle où la partie alkyle est un reste linéaire ou ramifié en C₁-C₁₂,
- t est un nombre entiers égal à 0 ou 1,
avec les conditions supplémentaires selon lesquelles :
+ quand t = 0, le symbole Y est alors un radical monovalent Y¹ représentant le groupement de formule : 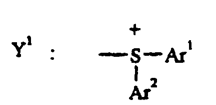 où les symboles Ar¹ et Ar² possèdent les significations données ci-avant,
+ quand t = 1 :
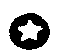 d'une part, le symbole Y est alors un radical divalent ayant les significations Y² à Y⁴ suivantes :
• Y² : un groupement de formule : 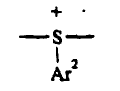 où le symbole Ar² possède les significations données ci-avant,
• Y³ : un lien valentiel simple,
• Y⁴ : un reste divalent choisi parmi : 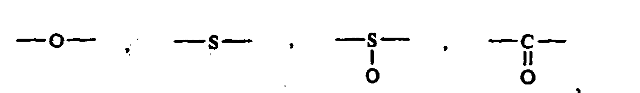 un reste alkylène linéaire ou ramifié en C₁-C₁₂, et un reste de formule ―Si(CH₃)₂O―,
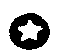 d'autre part, dans le cas uniquement où le symbole Y représente Y³ ou Y⁴, les radicaux Ar¹ et Ar² (terminaux) possèdent, outre les significations données ci-avant, la possibilité d'être reliés entre eux par le reste Y' consistant dans Y'¹ un lien valentiel simple ou dans Y'² un reste divalent choisi parmi les restes cités à propos de la définition de Y⁴, qui est installé entre les atomes de carbone, se faisant face, situés sur chaque cycle aromatique en position ortho par rapport à l'atome de carbone directement relié au cation S⁺ ;
→ 3.2. et/ou au moins une espèce monosulfonium possédant un seul centre cationique S⁺ par mole de cation et consistant dans la plupart des cas dans des espèces de formule : 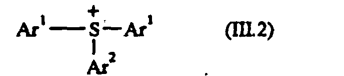
dans laquelle Ar¹ et Ar² ont les significations données ci-avant à propos de la formule (III.1), incluant la possibilité de relier directement entre eux un seul des radicaux Ar¹ à Ar² selon la manière indiquée ci-avant à propos de la définition de la condition supplémentaire en vigueur quand t = 1 dans la formule (II), faisant appel au reste Y' ;
(4) les sels organométalliques de formule (IV) :
(L¹L²L³M)^{+q} (IV)
formule dans laquelle :
• M représente un métal du groupe 4 à 10,
• L¹ représente 1 ligand lié au métal M par des électrons π, ligand choisi parmi les ligands η³-alkyl, η⁵⁻ cyclopendadiènyl et η⁷ cycloheptratriènyl et les composés η⁶ - aromatiques choisis parmi les ligands η⁶-benzène éventuellement substitués et les composés ayant de 2 à 4 cycles condensés, chaque cycle étant capable de contribuer à la couche de valence du métal M par 3 à 8 électrons π,
• L² représente un ligand lié au métal M par des électrons π, ligand choisi parmi les ligands η⁷-cycloheptatriènyl et les composés η⁶-aromatiques choisis parmi les ligands η⁶- benzène éventuellement substitués et les composés ayant de 2 à 4 cycles condensés, chaque cycle étant capable de contribuer à la couche de valence du métal M par 6 ou 7 électrons π,
• L³ représente de 0 à 3 ligands identiques ou différents liés au métal M par des électrons σ, ligand(s) choisi(s) parmi CO et NO₂⁺ ; la charge électronique totale q du complexe à laquelle contribuent L¹, L2 et L³ et la charge ionique du métal M étant positive et égale à 1 ou 2 ; □ *l'entité anionique* borate ayant pour formule :
[BXₐ R_{b}]⁻
formule dans laquelle :
- a et b sont des nombres entiers allant pour a de 0 à 3 et pour b de 1 à 4 avec a + b = 4,
- les symboles X représentent :
∗ un atome d'halogène avec a = 0 à 3,
∗ une fonction OH avec a = 0 à 2,
- les symboles R sont identiques ou différents et représentent :
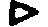 un radical phényle substitué par au moins un groupement électroattracteur et/ou par au moins 2 atomes d'halogène ce lorsque l'entité cationique est un onium d'un élément des groupes 15 à 17,
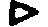 un radical phényle substitué par au moins un élément ou un groupement électroattracteur et ce lorsque l'entité cationique est un complexe organométallique d'un élément des groupes 4 à 10,
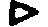 un radical aryle contenant au moins deux noyaux aromatiques, éventuellement substitué par au moins un élément ou un groupement électroattracteur, quelle que soit l'entité cationique ;
-C- 1 à 50, parties en poids d'au moins un diluant réactif consistant dans un composé organique non organosilicique ou organosilicique comportant dans sa structure au moins un GFR tel que défini supra, et éventuellement au moins un groupement fonctionnel secondaire (GFS) différent d'un GFR, mais capable de réagir chimiquement avec un GFR ;
-D- 0 à 10 parties en poids d'au moins un pigment ;
-E- 0 à 100 parties en poids d'une charge de nature minérale ;
-F- 0 à 10 parties en poids d'au moins un photosensibilisateur ;
-G- 0 à 10⁻² partie en poids d'un stabilisateur consistant dans au moins un agent aminé stabilisant ;
-H- 0 à 5 parties en poids d'un promoteur d'adhérence ;
2 - à appliquer cette composition sur un support (interface bloc moteur/culasse ou joint plat de culasse), et
3 - à faire réticuler la composition appliquée par activation photochimique et/ou thermique et/ou sous un faisceau d'électrons.

2. Procédé selon la revendication 1, **caractérisé en ce que** le support est un joint de culasse métallique.

3. Procédé selon la revendication 2, **caractérisé en ce que** le support est un joint de culasse multifeuilles métalliques, et **en ce que** l'on forme un revêtement sur au moins l'une des faces d'au moins l'une des feuilles composant le joint de culasse multifeuilles métalliques.

4. Procédé selon l'une quelconque des revendications 1 à 3, **caractérisé en ce que** les motifs fonctionnels compris dans les groupements GFR sont sélectionnés dans le groupe de motifs suivants :
- une fonction éthyléniquement insaturée et activée,
- époxyde,
- oxéthane
- et leurs mélanges,
et **en ce que** les motifs fonctionnels compris dans les groupements optionnels GFS sont sélectionnés dans le groupe de motifs suivants :
- hydroxy,
- alcoxy,
- carboxyle,
- et leurs mélanges.

5. Procédé selon l'une quelconque des revendications 1 à 4, **caractérisée en ce que** les POS A sont des époxysilicones et/ou des vinyléthersilicones qui sont :
→ soit linéaires ou sensiblement linéaires et constitués de motifs de formule (**I**), terminés par des motifs de formule (**II**),
→ soit cycliques et constitués par des motifs de formule (**II**): 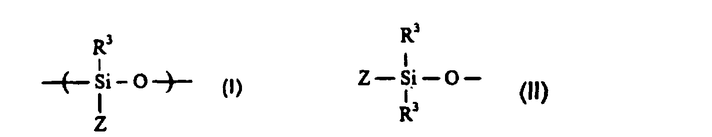
formules dans lesquelles :
• les symboles R³ sont semblables ou différents et représentent :
- soit un radical hydroxy,
- soit un radical alkyle linéaire ou ramifié en C₁-C₁₈, éventuellement substitué, par un ou des halogènes et/ou un radical hydroxy,
- soit un radical alcényle en C₂ - C₈,
- soit un radical cycloalkyle en C₅-C₈, éventuellement substitué,
- soit un radical aryle ou aralkyle, éventuellement substitué par des halogènes et/ou des alcoxyles,
• les symboles Z sont semblables ou différents et représentent :
- soit le radical R³,
- soit un groupement GFR correspondant à un reste époxyde ou vinyléther relié au silicium par l'intermédiaire d'un radical divalent contenant de 2 à 20 atomes de carbone et comportant éventuellement un hétéroatome,
l'un au moins des symboles Z correspondant à un groupement GFR.

6. Procédé selon l'une quelconque des revendications 1 à 5, **caractérisé en ce que** les POS A sont des époxysilicones de formule (**A.1**), (**A.2**) et (**A3**) : 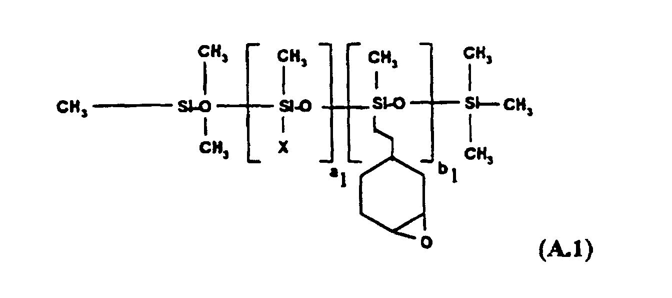 avec X = CH₃ ; phényle ; cycloalkyle C₅-C₈ ; alkyle C₁-C₁₈ ; alcényle C₂-C₈ ;
-OH; H ; -CH₂-CH₂-CH₂-OH ; -CH₂-CH₂-CF₃ ; -(CH₂)ₙ-CF₃, n = 1 à 20 ; 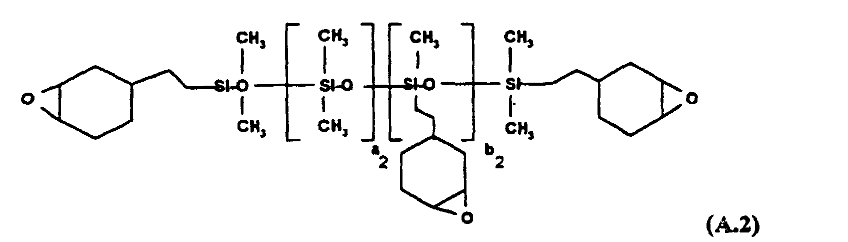 - a₁, a₂ et b₁, b₂ étant définis comme suit dans ces formules (**A.1**) et (**A.2**)
1 ≤ a₁, a₂ 1 ≤ b₁, b₂
- a₂, b₂ étant = 0 dans la formule (**A.2**) pour donner le disiloxane époxydé (**A.3**)

7. Procédé selon l'une quelconque des revendications 1 à 6, **caractérisé en ce que** le (ou les) diluants C réactif(s) est (sont) choisi(s) :
→ parmi les composés organiques non organosiliciques (C₁) à groupements réactifs GFR + éventuellement GFS ayant les formules suivantes : 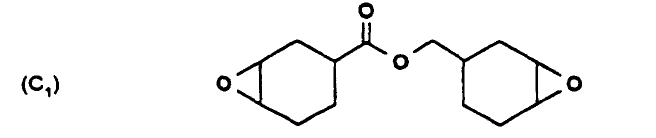 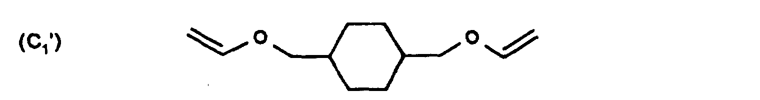 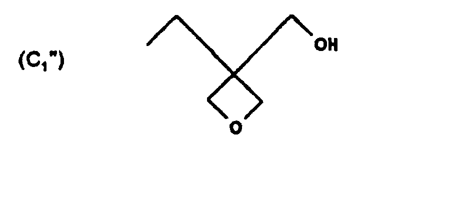
(C₁''') HO-(CH₂)₄-O-CH=CH₂
→ et/ou parmi les composés organosiliciques (C₂) à groupement réactifs GFR + éventuellement GFS ayant les formules suivantes : 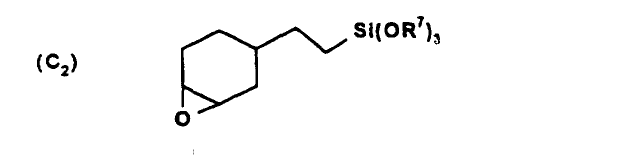
avec R⁷ = alkyle C₁-C₁₀, 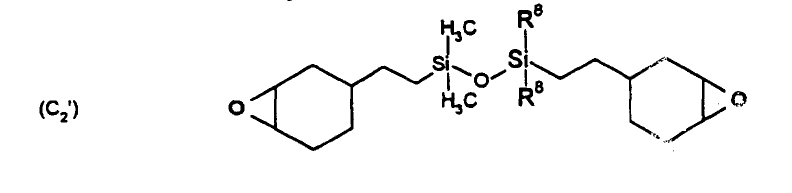 avec R⁸ représentant indépendamment un alkyle en C₁-C₁₀.

8. Procédé selon l'une quelconque des revendications 1 à 7, **caractérisé en ce que** le diluant (C) présente une température d'ébullition θéb ≥ 100°C à pression atmosphérique normale et une viscosité à 25° C η ≤ 100 mPa.s.

9. Procédé selon l'une quelconque des revendications 1 à 8, **caractérisé en ce que**, préalablement à l'étape 1, on enduit le support à revêtir à l'aide d'un primaire d'adhérence du type de ceux comprenant au moins un composé choisi dans le groupe comportant :
- des silanes alcoxylés porteurs d'au moins une insaturation éthylénique et/ou d'au moins une fonction époxyde,
- des (méth)acrylates,
- des chélates et/ou des alcoxydes métalliques,
- des compositions silicones réticulables et précurseurs d'élastomères silicones.

## Patentansprüche

1. Verfahren zur Herstellung einer haftmindernden und abdichtenden Imprägnierung und/oder Beschichtung, die an der Übergangsfläche *Motorblock* / *Zylinderkopf* von Motoren eingesetzt wird und insbesondere auf Flachdichtungen, speziell Zylinderkopfdichtungen angewandt wird,
**dadurch gekennzeichnet, dass** es im Wesentlichen darin besteht:
1 - eine Siliconzusammensetzung zu Verwenden, die umfasst:
-A- 100 Gewichtsteile wenigstens eines Polyorganosiloxans (POS), das auf kationischem und/oder radikalischem Weg und über funktionelle Vernetzungsgruppen (GFR) vernetzbar ist, wobei diese GFR untereinander gleich oder verschieden sind und ausgewählt sind unter denjenigen, die wenigstens eine funktionelle Einheit heterocyclischer Art mit einem oder mehreren Elektronendonoratomen umfassen, und/oder unter denjenigen, die ethylenisch ungesättigt und mit wenigstens einem Elektronendonoratom, das die Basizität des π-Systems erhöht, substituiert sind;
-B- 0,01 bis 10 Gewichtsteile wenigstens eines Initiatorsalzes (PA), das aus einem Borat von Onium eines Elements der Gruppen 15 bis 17 des Periodensystems [Chem. & Eng. News, Vol. 63, Nr. 5, 26 vom 4. Februar 1985] oder von einem metallorganischen Komplex eines Elements der Gruppen 4 bis 10 des Periodensystems (gleiche Referenz) besteht,
□ wobei *die kationische Einheit* besagten Borats ausgewählt ist unter:
(1) - den Oniumsalzen der Formel (I):
[(R¹)ₙ -A- (R²)ₘ]⁺ (I)
eine Formel, worin:
• A ein Element der Gruppen 15 bis 17 darstellt;
• R¹ einen carbocyclischen oder heterocyclischen C₆ - C₂₀-Arylrest darstellt, wobei besagter heterocyclischer Rest als Heteroelemente Stickstoff oder Schwefel enthalten kann;
• R² R¹ oder einen linearen oder verzweigten C₁ - C₃₀-Alkyl- oder Alkenylrest darstellt; wobei besagte Reste R¹ und R² gegebenenfalls mit einer C₁ - C₂₅-Alkoxygruppe, C₁ - C₂₅ - Alkylgruppe, Nitro-, Chlor-, Brom-, Cyano-, Carboxy-, Ester-, Mercaptogruppe substituiert sind,
• n eine ganze Zahl von 1 bis v + 1 ist, wobei v die Wertigkeit des Elements A ist,
• m eine ganze Zahl von 0 bis v - 1 ist, wobei n + m = v + 1,
(2) - den Oxoisothiochromaniumsalzen, die die Formel: 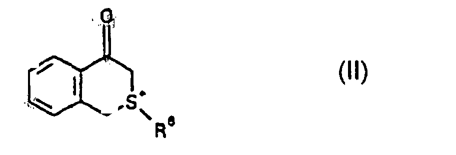 besitzen, worin der Rest R⁶ einen linearen oder verzweigten C₁ - C₂₀-Alkylrest darstellt;
(3) - den Sulfoniumsalzen, worin die kationische Einheit umfasst:
→ 3.1. wenigstens eine Polysulfoniumspezies der Formel III.1 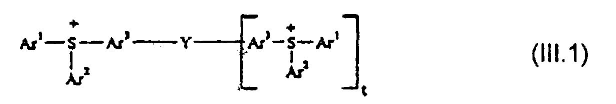 worin:
- die Symbole Ar¹, die untereinander gleich oder verschieden sein können, jeweils einen einwertigen Phenyl- oder Naphthylrest darstellen, der gegebenenfalls substituiert ist mit einem oder mehreren Resten, die ausgewählt sind unter: einem linearen oder verzweigten C₁ - C₁₂-Alkylrest, einem linearen oder verzweigten C₁ - C₁₂-Alkoxyrest, einem Halogenatom, einer -OH-Gruppe, einer -COOH-Gruppe, einer -COO-Alkyl-Estergruppe, worin der Alkylteil ein linearer oder verzweigter C₁ - C₁₂-Rest ist, und einer Gruppe der Formel -Y⁴-Ar², worin die Symbole Y⁴ und Ar² die im direkt Folgenden angegebenen Bedeutungen haben,
- die Symbole Ar², die untereinander oder mit Ar¹ gleich oder verschieden sein können, jeweils einen einwertigen Phenyl- oder Naphthylrest darstellen, der gegebenenfalls substituiert ist mit einem oder mehreren Resten, die ausgewählt sind unter: einem linearen oder verzweigten C₁ - C₁₂-Alkylrest, einem linearen oder verzweigten C₁ - C₁₂-Alkoxyrest, einem Halogenatom, einer -OH-Gruppe, einer -COOH-Gruppe, einer -COO-Alkyl-Estergruppe, worin der Alkylteil ein linearer oder verzweigter C₁ - C₁₂-Rest ist,
- die Symbole Ar³, die untereinander oder gleich oder verschieden sein können, jeweils einen zweiwertigen Phenylen- oder Naphthylenrest darstellen, der gegebenenfalls substituiert ist mit einem oder mehreren Resten, die ausgewählt sind unter: einem linearen oder verzweigten C₁ - C₁₂-Alkylrest, einem linearen oder verzweigten C₁ - C₁₂-Alkoxyrest, einem Halogenatom, einer -OH-Gruppe, einer -COOH-Gruppe, einer -COO-Alkyl-Estergruppe, worin der Alkylteil ein linearer oder verzweigter C₁ - C₁₂-Rest ist,
- t eine ganze Zahl gleich 0 oder 1 ist,
mit den zusätzlichen Bedingungen, gemäß denen:
+ wenn t = 0, das Symbol Y dann ein einwertiger Rest Y¹ ist, der die Gruppe der Formel: 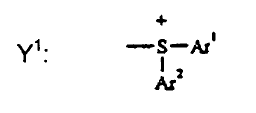 darstellt, worin die Symbole Ar¹ und Ar² die zuvor angegebenen Bedeutungen besitzen,
+ wenn t = 1:
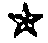 dann einerseits das Symbol Y ein zweiwertiger Rest ist mit den folgenden Bedeutungen Y² bis Y⁴:
• Y²: eine Gruppe der Formel: 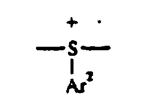 worin das Symbol Ar² die zuvor angegebenen Bedeutungen besitzt,
• Y³: eine einfache Valenzbindung,
• Y⁴: ein zweiwertiger Rest, der ausgewählt ist unter: 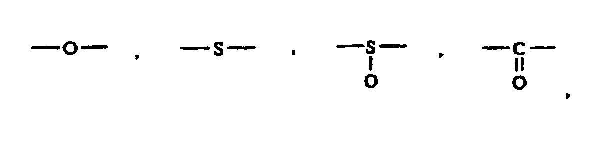 einem linearen oder verzweigten C₁ -C₁₂-Alkylenrest und einem Rest der Formel -Si(CH₃)₂O-,
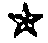 andererseits, nur in dem Fall, wo das Symbol Y Y³ oder Y⁴ darstellt, die (endständigen) Reste Ar¹ und Ar², außer den zuvor angegebenen Bedeutungen, die Möglichkeit besitzen, untereinander verbunden zu sein über den Rest Y', der aus Y'¹, einer einfachen Valenzbindung, oder aus Y'², einem zweiwertigen Rest, besteht, der ausgewählt ist unter den bezüglich der Definition von Y⁴ angeführten Resten, der zwischen den sich gegenüber liegenden Kohlenstoffatomen eingebaut ist, die an jedem aromatischen Ring in ortho-Position, bezogen auf das direkt an das Kation S⁺ gebundene Kohlenstoffatom, liegen;
→ 3.2. und/oder wenigstens eine Monosulfoniumspezies, die ein einziges kationisches Zentrum S⁺ pro Mol Kation besitzt und in den meisten Fällen aus Spezies der Formel: 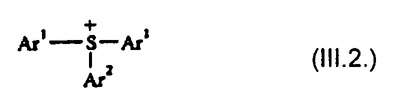 besteht, worin Ar¹ und Ar² die zuvor bezüglich der Formel (III.1.) angegebenen Bedeutungen besitzen, einschließlich der Möglichkeit, einen einzigen der Reste Ar¹ bis Ar² direkt miteinander zu verbinden gemäß der Art und Weise, die zuvor bezüglich der Definition der zusätzlichen Bedingung angegeben wurde, die in Kraft tritt, wenn t = 1 in der Formel (II), die auf einen Rest Y' zurückgreift;
(4) - den metallorganischen Salzen der Formel (IV):
(L¹L²L³M)^{+q} (IV)
eine Formel, worin:
• M ein Metall der Gruppe 4 bis 10 darstellt,
• L¹ 1 Liganden darstellt, der über π-Elektronen an das Metall M gebunden ist, ein Ligand, der ausgewählt ist unter den η³-Alkyl-, η⁵-Cyclopentadienylund η⁷-Cycloheptatrienyl-Liganden und den aromatischen η⁶-Verbindungen, die ausgewählt sind unter den η⁶-Benzen-Liganden, die gegebenenfalls substituiert sind, und den Verbindungen mit 2 bis 4 kondensierten Ringen, wobei jeder Ring mit 3 bis 8 π-Elektronen zur Valenzschale des Metalls M beitragen kann,
• L² einen Liganden darstellt, der über π-Elektronen an das Metall M gebunden ist, ein Ligand, der ausgewählt ist unter den η⁷-Cycloheptatrienyl-Liganden und den aromatischen η⁶-Verbindungen, die ausgewählt sind unter den η⁶-Benzen-Liganden, die gegebenenfalls substituiert sind, und den Verbindungen mit 2 bis 4 kondensierten Ringen, wobei jeder Ring mit 6 oder 7 π-Elektronen zur Valenzschale des Metalls M beitragen kann.
• L³ 0 bis 3 gleiche oder verschiedene Liganden darstellt, die über σ-Elektronen an das Metall M gebunden sind, ein Ligand (Liganden), der (die) ausgewählt ist (sind) unter CO und NO₂⁺; wobei die Gesamtelektronenladung q des Komplexes, zu der L¹, L² und L³ und die Ionenladung des Metalls M beitragen, positiv und gleich 1 oder 2 ist;
□ und *die anionische Einheit* Borat zur Formel hat:
[BXₐR_{b}]⁻
eine Formel, worin:
- a und b ganze Zahlen sind, die für a von 0 bis 3 und für b von 1 bis 4 gehen, wobei a + b = 4,
- die Symbole X darstellen:
* ein Halogenatom mit a = 0 bis 3,
* eine OH-Funktion mit a = 0 bis 2,
- die Symbole R gleich oder verschieden sind und darstellen:
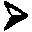 einen Phenylrest, der mit wenigstens einer elektronenziehenden Gruppe und/oder mit wenigstens 2 Halogenatomen substituiert ist, wenn die kationische Einheit ein Onium eines Elements der Gruppen 15 bis 17 ist,
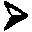 einen Phenylrest, der mit wenigstens einem elektronenziehenden Element oder einer elektronenziehenden Gruppe substituiert ist, wenn die kationische Einheit ein metallorganischer Komplex eines Elements der Gruppen 4 bis 10 ist,
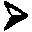 einen Arylrest mit wenigstens zwei aromatischen Kernen, der gegebenenfalls mit wenigstens einem elektronenziehenden Element oder einer elektronenziehenden Gruppe substituiert ist, wie auch immer die kationische Einheit ist;
-C- 1 bis 50 Gewichtsteile wenigstens eines reaktiven Verdünnungsmittels, das aus einer organischen nicht siliciumorganischen oder siliciumorganischen Verbindung besteht, die in ihrer Struktur wenigstens eine GFR, wie oben definiert, und gegebenenfalls wenigstens eine zweite funktionelle Gruppe (GFS), die von einer GFR verschieden ist, aber mit einer GFR chemisch reagieren kann, umfasst;
-D- 0 bis 10 Gewichtsteile wenigstens eines Pigments;
-E- 0 bis 100 Gewichtsteile eines Füllstoffs mineralischer Art;
-F- 0 bis 10 Gewichtsteile wenigstens eines Photosensibilisators;
-G- 0 bis 10⁻² Gewichtsteile eines Stabilisators, der aus wenigstens einem stabilisierenden aminhaltigen Mittel besteht;
-H- 0 bis 5 Gewichtsteile eines Haftungspromotors;
2 - diese Zusammensetzung auf einen Träger (Übergangsfläche Motorblock / Zylinderkopf oder flache Zylinderkopfdichtung) aufzutragen und
3 - die aufgebrachte Zusammensetzung durch photochemische und/oder thermische Aktivierung und/oder unter einem Elektronenstrahl vernetzen zu lassen.

2. Verfahren gemäß Anspruch 1, **dadurch gekennzeichnet, dass** der Träger eine Metall-Zylinderkopfdichtung ist.

3. Verfahren gemäß Anspruch 2, **dadurch gekennzeichnet, dass** der Träger eine Mehrlagen-Metall-Zylinderkopfdichtung ist, und dadurch, dass man eine Beschichtung auf wenigstens einer der Seiten wenigstens einer der Lagen, die die Mehrlagen-Metall-Zylinderkopfdichtung ausmacht, bildet.

4. Verfahren gemäß einem der Ansprüche 1 bis 3, **dadurch gekennzeichnet, dass** die funktionellen Einheiten, die in den GFR-Gruppen enthalten sind, ausgewählt sind aus der Gruppe der folgenden Einheiten:
- eine ethylenisch ungesättigte und aktivierte Funktion,
- Epoxid,
- Oxethan
- und deren Gemische,
und dadurch, dass die funktionellen Einheiten, die in den optionalen GFS-Gruppen enthalten sind, ausgewählt sind aus der Gruppe der folgenden Einheiten:
- Hydroxy,
- Alkoxy,
- Carboxyl
- und deren Gemische.

5. Verfahren gemäß einem der Ansprüche 1 bis 4, **dadurch gekennzeichnet, dass** die POS A Epoxysilicone und/oder Vinylethersilicone sind, die:
→ entweder linear oder fast linear sind und aus Einheiten der Formel (I), die von Einheiten der Formel (II) beendet werden, bestehen,
→ oder cyclisch sind und aus Einheiten der Formel (II) bestehen: 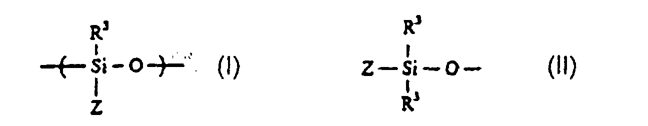
Formeln, worin:
• die Symbole R³ gleich oder verschieden sind und darstellen:
- entweder einen Hydroxyrest,
- oder einen linearen oder verzweigten C₁ - C₁₈-Alkylrest, der gegebenenfalls mit einem oder mehreren Halogenen und/oder einem Hydroxyrest substituiert ist,
- oder einen C₂ - C₈-Alkenylrest,
- oder einen C₅-C₈-Cycloalkylrest, der gegebenenfalls substituiert ist,
- oder einen Aryl- oder Aralkylrest, der gegebenenfalls mit Halogenen und/oder Alkoxylen substituiert ist,
• die Symbole Z gleich oder verschieden sind und darstellen:
- entweder den Rest R³,
- oder eine GFR-Gruppe, die einem Epoxid- oder Vinyletherrest entspricht, die über einen zweiwertigen Rest, der 2 bis 20 Kohlenstoffatome enthält und gegebenenfalls ein Heteroatom umfasst, an das Silicium gebunden ist,
wobei wenigstens eins der Symbole Z einer GFR-Gruppe entspricht.

6. Verfahren gemäß einem der Ansprüche 1 bis 5, **dadurch gekennzeichnet, dass** die POS A Epoxysilicone der Formel (**A.1**), (**A.2**) und (**A.3**) sind: 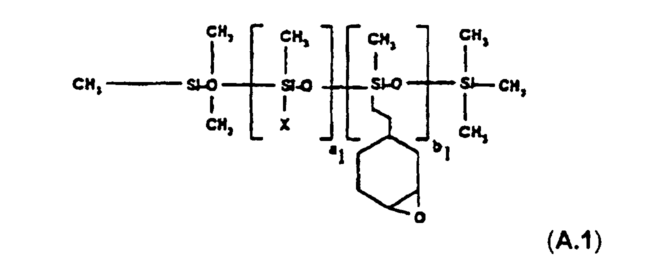 mit X = CH₃; Phenyl; C₅ - C₈-Cycloalkyl; C₁ - C₁₈-Alkyl; C₂ -C₈-Alkenyl; -OH; H; -CH₂-CH₂-CH₂-OH; -CH₂-CH₂-CF₃; -(CH₂)ₙ-CF₃, n = 1 bis 20; 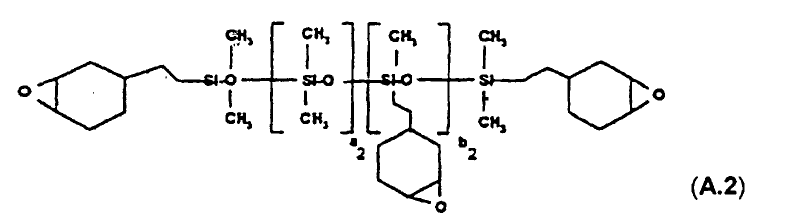
- wobei a₁, a₂ und b₁, b₂ in diesen Formeln (**A.1**) und (**A.2**) wie folgt definiert sind
1 ≤ a₁, a₂ 1 ≤ b₁, b₂
- und a₂, b₂ in der Formel (**A.2**) = 0 sind, um das Epoxiddisiloxan (**A.3**) zu ergeben.

7. Verfahren gemäß einem der Ansprüche 1 bis 6, **dadurch gekennzeichnet, dass** das (oder die) reaktive(n) Verdünnungsmittel C ausgewählt ist (sind):
→ unter den organischen nicht siliciumorganischen Verbindungen (C₁) mit reaktiven GFR-Gruppen + gegebenenfalls GFS-Gruppen mit den folgenden Formeln: 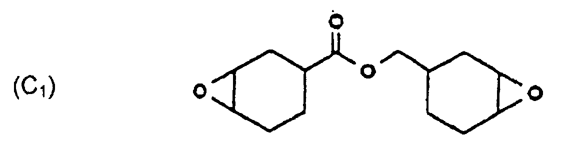 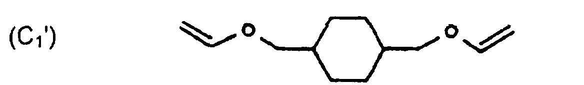 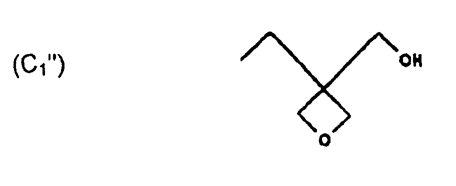
(C₁''') HO-(CH₂)₄-O-CH=CH₂
→ und/oder unter den siliciumorganischen Verbindungen (C₂) mit reaktiven GFR-Gruppen + gegebenenfalls GFS-Gruppen mit den folgenden Formeln: 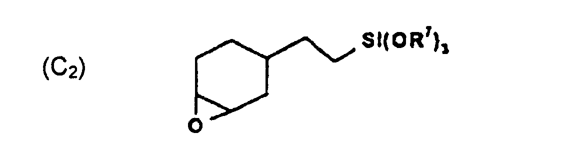 mit R⁷= C₁ - C₁₀-Alkyl, 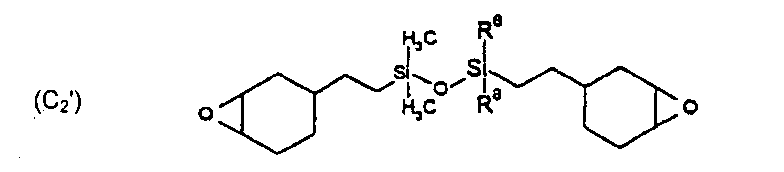 mit R⁸, das unabhängig ein C₁ - C₁₀-Alkyl darstellt.

8. Verfahren gemäß einem der Ansprüche 1 bis 7, **dadurch gekennzeichnet, dass** das Verdünnungsmittel (C) eine Siedetemperatur Θ_{sied} ≥ 100 °C bei Normal-Atmosphärendruck und eine Viskosität bei 25 °C η ≤ 100 mPa.s aufweist.

9. Verfahren gemäß einem der Ansprüche 1 bis 8, **dadurch gekennzeichnet, dass** man vor dem Schritt 1 den zu beschichtenden Träger mit Hilfe einer Haftgrundierung vom Typ derjenigen streicht, die wenigstens eine Verbindung umfassen, die ausgewählt ist aus der Gruppe, die umfasst:
- Alkoxysilane, die wenigstens eine ethylenisch ungesättigte Bindung und/oder wenigstens eine Epoxidfunktion tragen,
- (Meth)acrylate,
- Metallchelate und/oder -alkoxide,
- vernetzbare Siliconzusammensetzungen und Siliconelastomervorstufen.

## Claims

1. Process for carrying out impregnation and/or for preparing a coating which gives release and is leaktight employed at the *engine block*/*cylinder head* interface of engines and applied in particular to sheet gaskets, in particular cylinder head gaskets,
**characterized in that** it consists essentially:
1 - in employing a silicone composition comprising:
-A- 100 parts by weight of at least one polyorganosiloxane (POS) crosslinkable by the cationic and/or radical route and via crosslinking functional groups (CFGs), these CFGs being identical to or different from one another and being chosen from those comprising at least one functional unit of heterocyclic nature having one or more electron-donating atoms and/or from those which are ethylenically unsaturated and substituted by at least one electron-donating atom which enhances the basicity of the π system;
-B- from 0.01 to 10 parts by weight of at least one initiator salt (PI) formed by a borate of an onium of an element from groups 15 to 17 of the Periodic Classification [Chem. & Eng. News, Vol. 63, No. 5, 26 of February 4, 1985] or of an organometallic complex of an element from groups 4 to 10 of the Periodic Classification (same reference),
□ *the cationic entity* of the said borate being chosen from:
(1) - onium cations of formula (I):
[(R¹)ₙ-A-(R²)ₘ]⁺ (I)
in which formula:
• A represents an element from groups 15 to 17;
• R¹ represents a C₆-C₂₀ carbocyclic or heterocyclic aryl radical, it being possible for the said heterocyclic radical to comprise nitrogen or sulphur as heteroelements;
• R² represents R¹ or a linear or branched C₁-C₃₀ alkyl or alkenyl radical; the said R¹ and R² radicals optionally being substituted by a C₁-C₂₅ alkoxy, C₁-C₂₅ alkyl, nitro, chloro, bromo, cyano, carboxy, ester or mercapto group,
• n is an integer ranging from 1 to v + 1, v being the valency of the element A,
• m is an integer ranging from 0 to v - 1, with n + m = v + 1,
(2) - oxoisothiochromanium cations having the formula: 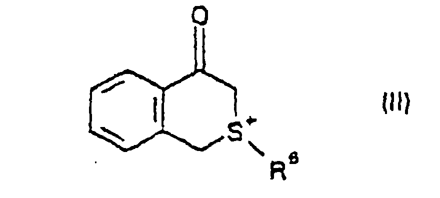 where the R⁶ radical represents a linear or branched C₁-C₂₀ alkyl radical;
(3) - sulphonium cations where the cationic entity comprises:
→ 3.1. at least one polysulphonium species of formula III.1 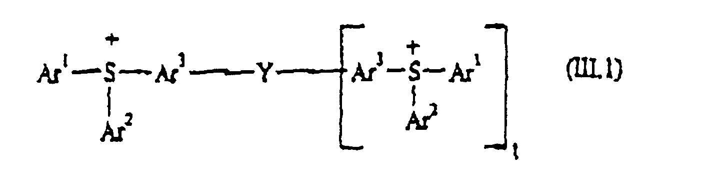 in which:
- the Ar¹ symbols, which can be identical to or different from one another, each represent a monovalent phenyl or naphthyl radical optionally substituted with one or more radicals chosen from: a linear or branched C₁-C₁₂ alkyl radical, a linear or branched C₁-C₁₂ alkoxy radical, a halogen atom, an -OH group, a -COOH group, a -COO-alkyl ester group, where the alkyl part is a linear or branched C₁-C₁₂ residue, and a group of formula -Y⁴-Ar², where the Y⁴ and Ar² symbols have the meanings given immediately below,
- the Ar² symbols, which can be identical to or different from one another or Ar¹, each represent a monovalent phenyl or naphthyl radical optionally substituted with one or more radicals chosen from: a linear or branched C₁-C₁₂ alkyl radical, a linear or branched C₁-C₁₂ alkoxy radical, a halogen atom, an -OH group, a -COOH group or a -COO-alkyl ester group, where the alkyl part is a linear or branched C₁-C₁₂ residue,
- the Ar³ symbols, which can be identical to or different from one another, each represent a divalent phenylene or naphthylene radical optionally substituted with one or more radicals chosen from: a linear or branched C₁-C₁₂ alkyl radical, a linear or branched C₁-C₁₂ alkoxy radical, a halogen atom, an -OH group, a -COOH group or a -COO-alkyl ester group, where the alkyl part is a linear or branched C₁-C₁₂ residue,
- t is an integer equal to 0 or 1,
with the additional conditions according to which:
+ when t = 0, the Y symbol is then a Y¹ monovalent radical representing the group of formula: 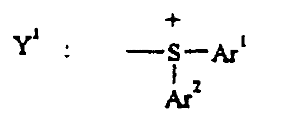 where the Ar¹ and Ar² symbols have the meanings given above,
+ when t = 1:
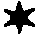 on the one hand, the Y symbol is then a divalent radical having the following meanings Y² to Y⁴:
• Y²: a group of formula: 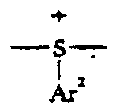 where the Ar² symbol has the meanings given above,
• Y³: a single valency bond,
• Y⁴: a divalent residue chosen from: 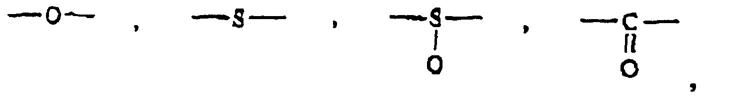 a linear or branched C₁-C₁₂ alkylene residue and a residue of formula -Si(CH₃)₂O-, on the other hand, solely in the case where the Y symbol represents Y³ or Y⁴, the Ar¹ and Ar² (terminal) radicals have, in addition to the meanings given above, the possibility of being connected to one another via the Y' residue consisting of Y'¹, a single valency bond, or of Y'², a divalent residue chosen from the residues cited with respect to the definition of Y⁴, which is inserted between the carbon atoms, facing each other, situated on each aromatic ring in the ortho position with respect to the carbon atom directly bonded to the S⁺ cation;
→ 3.2. and/or at least one monosulphonium species having a single S⁺ cationic centre per mole of cation and consisting, in the majority of cases, of species of formula: 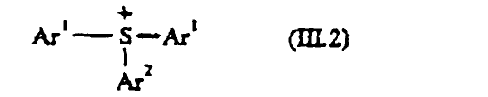 in which Ar¹ and Ar² have the meanings given above with respect to the formula (III.1), including the possibility of connecting directly between them only one of the Ar¹ radicals to Ar² according to the way indicated above with respect to the definition of the additional condition in force when t=1 in the formula (II) involving the Y' residue;
(4) organometallic cations of formula (IV):
(L¹L²L³M) ^{+q} (IV)
in which formula:
• M represents a metal from group 4 to 10,
• L¹ represents a ligand bonded to the metal M via π electrons, which ligand is chosen from η³-alkyl, η⁵-cyclopentadienyl and η⁷-cycloheptatrienyl ligands and η⁶-aromatic compounds chosen from optionally substituted η⁶-benzene ligands and compounds having from 2 to 4 condensed rings, each ring being capable of contributing to the valency layer of the metal M via 3 to 8 π electrons,
• L² represents a ligand bonded to the metal M via π electrons, which ligand is chosen from η⁷-cycloheptatrienyl ligands and η⁶-aromatic compounds chosen from optionally substituted η⁶-benzene ligands and compounds having from 2 to 4 condensed rings, each ring being capable of contributing to the valency layer of the metal M via 6 or 7 π electrons,
• L³ represents from 0 to 3 identical or different ligands bonded to the metal M via σ electrons, which ligand(s) is (are) chosen from CO and NO₂⁺; the total electronic charge q of the complex to which L¹, L² and L³ and the ionic charge of the metal M contribute being positive and equal to 1 or 2;
□ *the anionic entity* of the said borate having the formula:
[BXₐR_{b}]⁻
in which formula:
- a and b are integers ranging from 0 to 3 for a and from 1 to 4 for b, with a + b = 4,
- the X symbols represent:
* a halogen atom with a = 0 to 3,
* an OH functional group with a = 0 to 2,
- the R symbols are identical or different and represent:
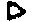 a phenyl radical substituted by at least one electron-withdrawing group and/or by at least 2 halogen atoms, this being when the cationic entity is an onium of an element from groups 15 to 17,
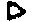 a phenyl radical substituted by at least one electron-withdrawing element or group, this being when the cationic entity is an organometallic complex of an element from groups 4 to 10,
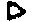 an aryl radical comprising at least two aromatic nuclei, which is optionally substituted by at least one electron-withdrawing element or group, whatever the cationic entity;
-C- 1 to 50 parts by weight of at least one reactive diluent consisting of a nonorganosilicon or organosilicon organic compound comprising, in its structure, at least one CFG as defined above and optionally at least one secondary functional group (SFG) other than a CFG but capable of reacting chemically with a CFG;
-D- 0 to 10 parts by weight of at least one pigment;
-E- 0 to 100 parts by weight of a filler of inorganic nature;
-F- 0 to 10 parts by weight of at least one photosensitizer;
-G- 0 to 10⁻² part by weight of a stabilizer consisting of at least one stabilizing amine agent,
-H- 0 to 5 parts by weight of an adhesion promoter;
2 - in applying this composition to a support (cylinder head sheet gasket or cylinder head/ engine block interface), and
3 - in crosslinking the applied composition by photochemical and/or thermal activation and/or under an electron beam.

2. Process according to claim 1, **characterized in that** the support is a metal cylinder head gasket.

3. Process according to claim 2, **characterized in that** the support is a metal multilayer cylinder head gasket and **in that** a coating is formed on at least one of the faces of at least one of the layers composing the metal multilayer cylinder head gasket.

4. Process according to any one of claims 1 to 3, **characterized in that** the functional units included in the CFG groups are selected from the group of following units:
- an ethylenically unsaturated and activated functional group,
- epoxide,
- oxethane,
- and their mixtures,
and **in that** the functional units included in the optional SFG groups are selected from the group of following units:
- hydroxyl,
- alkoxy,
- carboxyl,
- and their mixtures.

5. Process according to any one of claims 1 to 4, **characterized in that** the POSs A are epoxysilicones and/or vinyl ether silicones which are:
→ either linear or substantially linear and composed of units of formula (I), terminated by units of formula (II),
→ or cyclic and composed of units of formula (I): 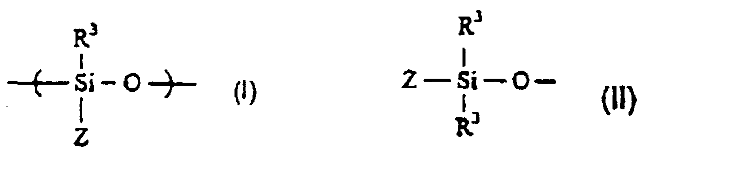
in which formulae:
• the R³ symbols are alike or different and represent:
- either a hydroxyl radical,
- or a linear or branched C₁-C₁₈ alkyl radical which is optionally substituted by one or more halogens and/or a hydroxyl radical,
- or a C₂-C₈ alkenyl radical,
- or an optionally substituted C₅-C₈ cycloalkyl radical,
- or an aryl or aralkyl radical which is optionally substituted by halogens and/or alkoxyls,
• the Z symbols are alike or different and represent:
- either the R³ radical,
- or a CFG group corresponding to an epoxide or vinyl ether residue connected to the silicon via a divalent radical comprising from 2 to 20 carbon atoms and optionally comprising a heteroatom, at least one of the Z symbols corresponding to a CFG group.

6. Process according to any one of claims 1 to 5, **characterized in that** the POSs A are epoxysilicones of formulae (A.1), (A.2) and (A.3): 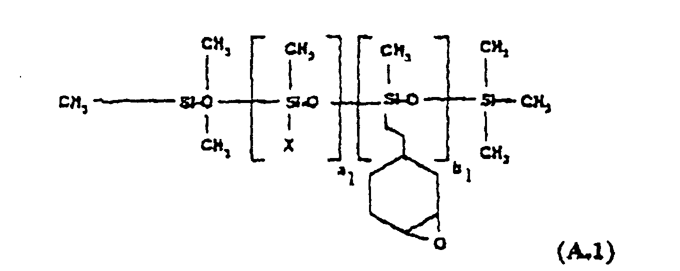 with X = CH₃; phenyl; C₅-C₈ cycloalkyl; C₁-C₁₈ alkyl; C₂-C₈ alkenyl; -OH; H; -CH₂-CH₂-CH₂-OH; -CH₂-CH₂-CF₃ or -(CH₂)ₙ-CF₃, n = 1 to 20; 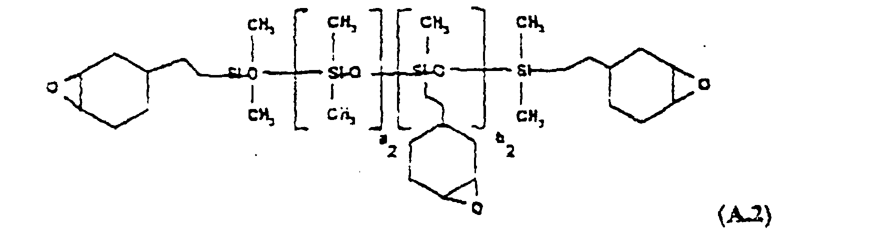
- a₁, a₂, b₁ and b₂ being defined as follows in these formulae (A.1) and (A.2)
1 ≤ a₁, a₂ 1 ≤ b₁, b₂
- a₂ and b₂ being = 0 in the formula (A.2) to give the epoxidized disiloxane (A.3).

7. Process according to any one of claims 1 to 6, **characterized in that** the reactive diluent(s) C is (are) chosen:
→ from the nonorganosilicon organic compounds (C₁) possessing CFG + optionally SFG reactive groups having the following formulae: 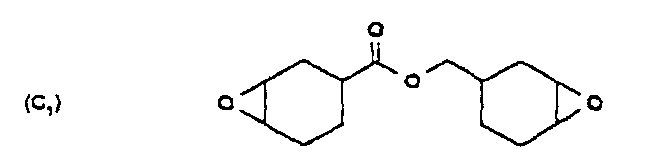 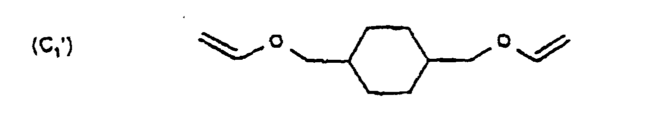 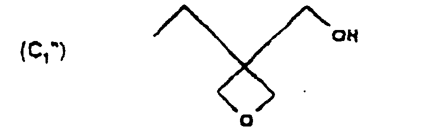
(C₁"') HO-(CH₂)₄-O-CH-CH₂
→ and/or from the organosilicon compounds (C₂) possessing CFG + optionally SFG reactive groups having the following formulae: 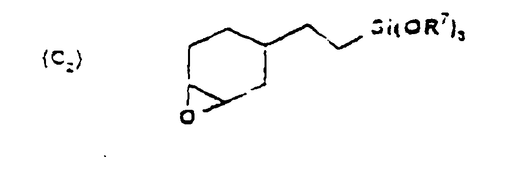 with R⁷ = C₁-C₁₀ alkyl, 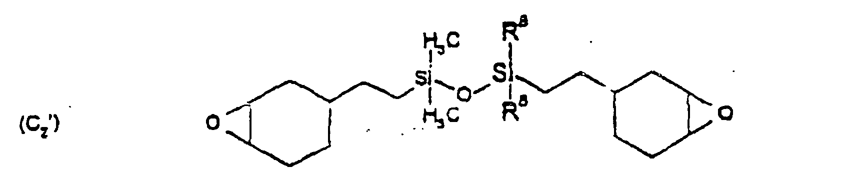 with R⁸ independently representing a C₁-C₁₀ alkyl.

8. Process according to any one of claims 1 to 7, **characterized in that** the diluent (C) exhibits a boiling point B.p. ≥ 100°C at standard atmospheric pressure and a viscosity at 25°C η ≤ 100 mPa.s.

9. Process according to any one of claims 1 to 8, **characterized in that**, prior to stage 1, the support to be coated is covered using an adhesion primer of the type of those comprising at least one compound chosen from the group consisting of:
- alkoxylated silanes carrying at least one ethylenic unsaturation and/or at least one epoxide functional group,
- (meth)acrylates,
- metal chelates and/or alkoxides,
- crosslinkable silicone compositions which are precursors of silicone elastomers.
